# EUROPEAN PATENT SPECIFICATION

(11) **EP 3 466 793 B1**
(45) Date of publication and mention of the grant of the patent: **09.08.2023**
(21) Application number: 17806355.8
(22) Date of filing: 15.05.2017
(51) Int. Cl.: B61L 3/00, B61L 23/04, B61L 27/20

(54) **VEHICLE CONTROL SYSTEM**
FAHRZEUGSTEUERUNGSSYSTEM
SYSTÈME DE COMMANDE DE VÉHICULE

(30) Priority: 02.06.2016 JP 2016111061
(43) Date of publication of application: 10.04.2019
(73) Proprietor: Hitachi, Ltd., Tokyo 100-8280 (JP)
(72) Inventor: NISHINO, Takayoshi, Tokyo 100-8280 (JP); WAJIMA, Takenori, Tokyo 100-8280 (JP); SATO, Yutaka, Tokyo 100-8280 (JP)
(74) Representative: Mewburn Ellis LLP
(86) International application number: PCT/JP2017/018234
(87) International publication number: WO 2017/208797

(56) References cited:
- EP-A1- 2 990 295
- WO-A1-2015/015494
- WO-A1-2015/123035
- DE-A1-102006 051 241
- JP-A- 2016 043 903
- JP-A- 2016 046 998

## Description

### Technical Field

The present invention relates to a vehicle control system, and more preferably to a vehicle control system which is applicable to a vehicle control system which controls a vehicle traveling on a track.

### Background Art

Conventionally, there has been known a notification system which ensures safety of a vehicle traveling on a track by providing a sensor which detects an obstacle on the track, and notifies an alarm or the like when the sensor detects the obstacle.

For example, Patent Literature 1 discloses a train automatic notification system which provides emergency information to not only a driver but also to the passengers in case of emergency. The train automatic notification system described in Patent Literature 1 is configured such that an obstacle detection device detects an obstacle based on an image imaged by a monitoring camera disposed within the track or along the track, an emergency information automatic notification device which receives a detection result from the obstacle detection device classifies the degree of emergency into ranks, and notifies the driver and the passengers of emergency information corresponding to the rank.

Patent Literature 2 describes that the train automatic notification system described in Patent Literature 1 has a drawback that "enhancement of safety and a travel service operation ratio when a failure occurs in a sensor installed on a ground is not taken into consideration". Patent Literature 2 discloses a vehicle control system which can overcome such a drawback, and can enhance safety and a travel service operation ratio of a train compared to a prior art when a failure occurs in a sensor installed on a ground.

Patent literature 3 proposes a system and method for obstacle identification and avoidance. Patent literature 4 proposes a safety device for the Transrapid and other rail-guided vehicles. Patent literature 5 proposes a video system and method for data communication.

### Citation List

### Patent Literature

Patent Literature 1: Japanese Unexamined Patent Application Publication 2009-202635
Patent Literature 2: Japanese Unexamined Patent Application Publication 2016-046998 (also published as EP 2990295 A1)
Patent Literature 3: WO 2015 015494 A1
Patent Literature 4: DE 10 2006 051241 A1
Patent Literature 5: WO 2015 123035 A1

### Summary of Invention

### Technical Problem

However, in the vehicle control system disclosed in Patent Literature 2, there may be a case where an obstacle cannot be detected due to a reason that a failure occurs in both a sensor installed on a ground and a sensor mounted on a vehicle at a point on a track or the like. When priorities are assigned to traveling of the vehicle, even when an obstacle does not exist in an actual state, a state where the vehicle is stopped occurs and hence, operation ratio of vehicle traveling is remarkably lowered. On the other hand, priority is assigned to operation ratio of vehicle traveling, the presence or the non-presence of an obstacle is indefinite and hence, there has been a concern that safety of vehicle traveling is lowered.

The present invention has been made in view of the abovementioned points, and it is an object of the present invention to provide a vehicle control system capable of performing a vehicle control by taking into account both safety and an operation ratio in vehicle traveling even when the presence or non-presence of an obstacle on a track cannot be sufficiently detected.

### Solution to Problem

To solve such problems, the present invention provides a vehicle control system according to claim 1 for controlling a travel service of a first vehicle which travels on a first track.

### Advantageous effects of Invention

According to the present invention, it is possible to provide a vehicle control system capable of performing a vehicle control while taking into consideration both safety and operation ratio in a vehicle travel service.

### Brief Description of Drawings

Fig. 1 is a view for describing a constitutional example of a vehicle control system according to a first embodiment.
Fig. 2 is a block diagram showing an example of main functional constitutional parts of the vehicle control system shown in Fig. 1.
Fig. 3 is a view for describing an example of processing relating to the determination of a risk rate.
Fig. 4 is a view (part 1) for describing an operational example of the vehicle control system according to the first embodiment.
Fig. 5 is a view (part 2) for describing an operational example of the vehicle control system according to the first embodiment.
Fig. 6 is a view for describing a constitutional example of a vehicle control system according to a second embodiment.
Fig. 7 is a view for describing an operational example of the vehicle control system according to the second embodiment.
Fig. 8 is a view for describing a constitutional example of a vehicle control system according to a third embodiment. Description of Embodiments

Hereinafter, embodiments of the present invention are described in detail with reference to drawings.

### (1) First Embodiment

### (1-1) Constitution of vehicle control system 1

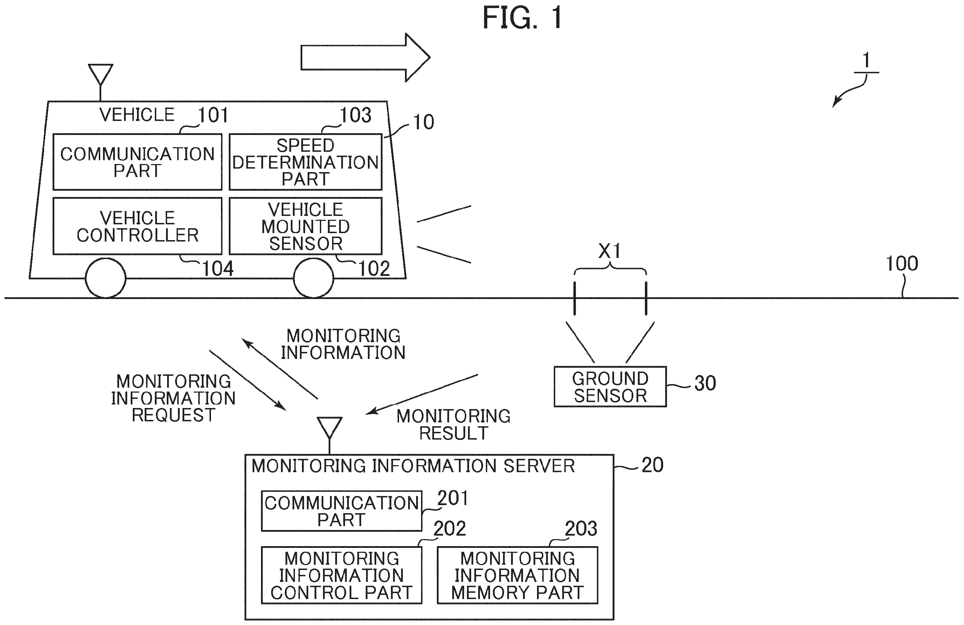

Fig. 1 is a view for describing a constitutional example of a vehicle control system according to a first embodiment. As shown in Fig. 1, the vehicle control system 1 according to the first embodiment is described by estimating a case where the vehicle control system 1 is applied to a railway transport system which realizes the transportation by allowing a vehicle 10 on a track 100 to travel in accordance with a predetermined travel service schedule.

First, the respective configuration of the vehicle control system 1 is described with reference to Fig. 1.

The vehicle 10 shown in Fig. 1 is a vehicle which travels on the track 100. In the case shown in Fig. 1, the vehicle 10 is going to enter a zone X1 of the track 100 with a direction from the left to the right as an advancing direction. The vehicle 10 includes: a communication part 101 which performs communication with the outside; a vehicle mounted sensor 102 which can detect the presence or the non-presence of an obstacle within a predetermined range; a speed determination part 103 which determines a target speed (details described later) of the vehicle 10; and a vehicle controller 104 which controls a traveling speed of the vehicle 10 based on the target speed. The zone X1 is an example of "predetermined point (predetermined range) " which becomes an object where the presence or the non-presence of the object is detected in this embodiment.

The communication part 101 is capable of communicating with the outside of the vehicle 10 (a communication part 201 of a monitoring information server 20 in the case shown in Fig. 1) by radio communication using data and signals, and the communication part 101 is realized by a communication interface of a general-use radio communication.

The vehicle mounted sensor 102 is a sensor capable of detecting (or monitoring) the presence or the non-presence of an obstacle in the predetermined monitoring range, and a general-use obstacle sensor can be used as the vehicle mounted sensor 102. To be more specific, when the vehicle 10 which travels on the track 100 approaches the zone X1 and the zone X1 falls within the monitoring range, the vehicle mounted sensor 102 shown in Fig. 1 detects the presence or the non-presence of an obstacle in the zone X1. A result of the detection by the vehicle mounted sensor 102 is inputted to the speed determination part 103 as a result of a monitoring result.

Timing at which a useful monitoring result can be outputted toward the speed determination part 103 from the vehicle mounted sensor 102 comes after the vehicle 10 sufficiently approaches the zone X1 so that the zone X1 falls within a detection range of the vehicle mounted sensor 102 so that a monitoring operation of the presence or the non-presence of an obstacle in the zone X1 can be performed. Accordingly, even when a monitoring result is transmitted to the speed determination part 103 from the vehicle mounted sensor 102 at a timing preceding the abovementioned timing, the content of the monitoring result including the presence or the non-presence of an obstacle and a monitoring time is rendered as "undetermined".

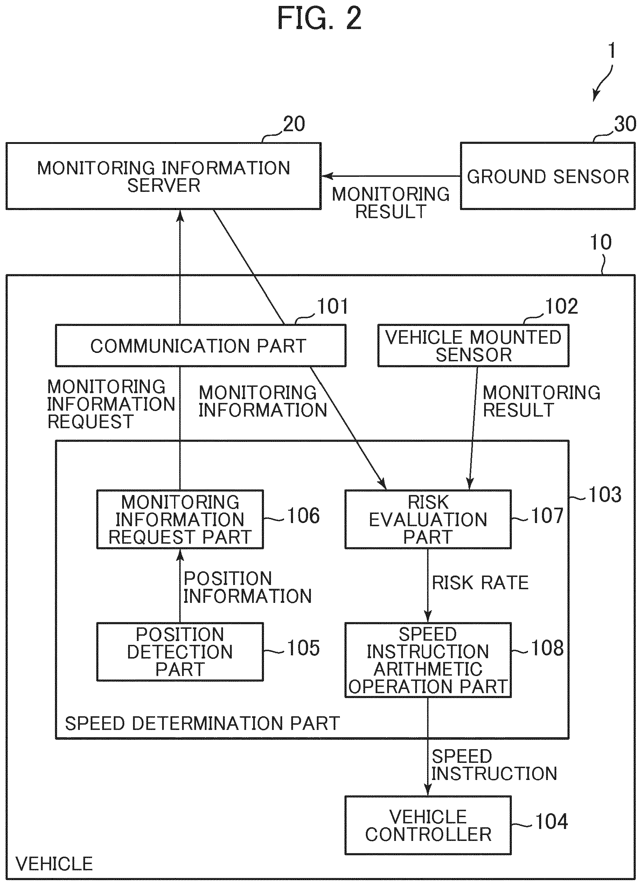

The speed determination part 103 collects a detection result (monitoring information, monitoring result) on an obstacle at a predetermined point (for example, the zone X1) by the respective sensors (vehicle mounted sensor 102, ground sensor 30) which the vehicle control system 1 includes, and can determine a target speed when the vehicle 10 travels at the predetermined point based on the collected information. Further, the speed determination part 103 also has a function of requesting the monitoring information server 20 to offer monitoring information stored in the monitoring information server 20 (monitoring information request). Such a speed determination part 103 can be realized by a computing device which includes a CPU (Central Processing Unit), a memory and the like, for example. The detail of the characteristic functions and configurations of the speed determination part 103 are described later with reference to Fig. 2.

The vehicle controller 104 is a controller for controlling a traveling speed of the vehicle 10. For example, the vehicle controller 104 may be a vehicle controller used in a railroad vehicle or the like in general. The vehicle controller 104 can change a traveling speed of the vehicle 10 to a desired speed, can set an upper limit speed of the traveling speed of the vehicle 10, and can stop the vehicle 10 during traveling. In this embodiment, particularly, when a target speed determined by the speed determination part 103 is inputted as a speed command, the vehicle controller 104 controls (mainly a deceleration control) a traveling speed of the vehicle 10 such that the traveling speed does not exceed the target speed instructed by the speed command.

The monitoring information server 20 shown in Fig. 1 is a computer which an administrator of the vehicle control system 1 or the like possesses. The monitoring information server 20 includes: a communication part 201 which performs communication with the outside; a monitoring information control part 202 which performs an overall control in the monitoring information server 20; and a monitoring information memory part 203 which stores monitoring information generated by a control performed by the monitoring information control part 202. The monitoring information server 20 is installed in a vehicle control room, a station through which the track 100 passes or the like, for example. Although the detail of a control performed by the monitoring information control part 202 is described later, to summarize such a control briefly, the monitoring information server 20 has a function of receiving a monitoring result from the ground sensor 30, a function of generating and storing monitoring information based on the received monitoring result, and a function of transmitting the monitoring information to the vehicle 10 in response to a request for the offer of monitoring information from the vehicle 10 (monitoring information request).

The communication part 201 can perform communication of data and signals with the outside of the monitoring information server 20 (the communication part 101 of the vehicle 10 and the ground sensor 30 in the case shown in Fig. 1) by radio communication, wired communication or the like. The communication part 201 can be realized by a communication interface used in general.

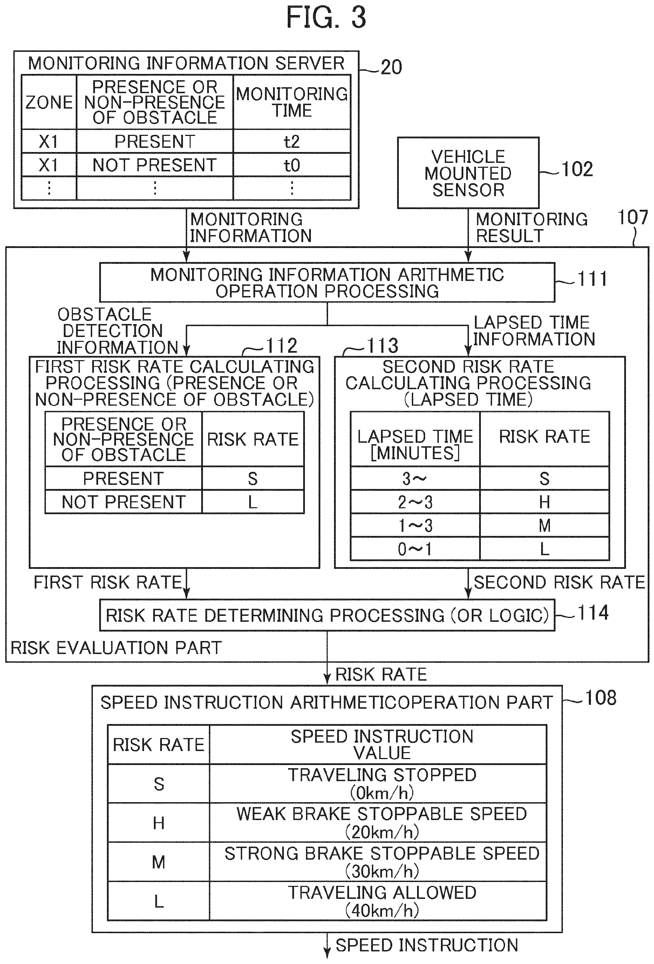

The monitoring information control part 202 receives a monitoring result from a sensor (the ground sensor 30 in the case shown in Fig. 1) which monitors the presence or the non-presence of an obstacle on the track 100 via the communication part 201. Then, the monitoring information control part 202 stores and accumulates the monitoring result in the monitoring information memory part 203 as monitoring information. Further, when the monitoring information control part 202 receives a monitoring information request from the vehicle 10 via the communication part 201, the monitoring information control part 202 transmits monitoring information stored in the monitoring information memory part 203 to the vehicle 10 via the communication part 201. Monitoring information stored in the monitoring information memory part 203 includes, in addition to information indicating the presence or the non-presence of an obstacle, information indicating monitoring times at which monitoring is performed (see the inside of the monitoring information server 20 shown in Fig. 3 described later).

Monitoring information transmitted to the vehicle 10 from the monitoring information server is not always the entire monitoring information stored in the monitoring information memory part 203, and only monitoring information relating to the zone X1 may be transmitted, for example. By transmitting only the required monitoring information in this manner, it is possible to expect an advantageous effect of shortening a time necessary for performing processing where the speed determination part 103 of the vehicle 10 determines a target speed.

From a viewpoint of further reducing a processing load, when there exists monitoring information which was transmitted to the vehicle 10 in the previous monitoring information request, the monitoring information server 20 may not transmit such monitoring information again, and may transmit only unprocessed (non-transmitted) monitoring information from the monitoring information stored in the monitoring information memory part 203 to the vehicle 10. Further, there may be the case where the monitoring information server 20 is configured such that monitoring results from a plurality of sensors are stored as monitoring information (although not shown in the drawing, the case is estimated where a plurality of ground sensors 30 are installed). In such a case, when unprocessed (non-transmitted) monitoring information exists in the plurality of sensors, monitoring information may be transmitted using only a monitoring result at a newest monitoring time.

The above variations relating to monitoring information transmitted from the monitoring information server to the vehicle 10 are also applicable to other embodiments (second and third embodiments) of the present invention.

The monitoring information memory part 203 is a memory medium which stores monitoring information in accordance with a control performed by the monitoring information control part 202. When storing of monitoring information is newly instructed, the monitoring information memory part 203 updates monitoring information in a mode where the monitoring information is added to the previously stored monitoring information. With respect to monitoring information stored in the monitoring information memory part 203, one example of such monitoring information is exemplified in the monitoring information server 20 shown in Fig. 3 described later.

The ground sensor 30 shown in Fig. 1 is a fixed sensor disposed at a place where the presence or the non-presence of an obstacle at a predetermined point (also considered as a predetermined range, for example, the zone X1) of the track 100 can be detected. The ground sensor 30 has a function of performing a monitoring operation for continuously detecting (or constantly detecting) the presence or the non-presence of an obstacle at the predetermined point and a function of outputting (transmitting) a result of the monitoring operation to the monitoring information server 20 as a monitoring result. Monitoring information outputted from the ground sensor 30 to the monitoring information server 20 contains, in addition to a detection result indicating the presence or the non-presence of an obstacle, a monitoring time at which the detection is performed.

A monitoring result obtained by the ground sensor 30 may be outputted as follows. For example, a monitoring operation which constantly detects the presence or the non-presence of an obstacle in the zone X1 may be performed, results of the monitoring operations performed plural times may be collected, and the collected results of the monitoring operations may be periodically outputted to the monitoring information server 20 as a monitoring result. Alternatively, for example, a monitoring operation which detects the presence or the non-presence of an obstacle in the zone X1 may be periodically performed, and a monitoring result may be outputted to the monitoring information server 20 each time the monitoring operation is performed.

Although the respective configurations of the vehicle control system 1 have been described heretofore, in this embodiment, a kind of obstacle which the respective sensors (the ground sensor 30, the vehicle mounted sensor 102) respectively monitor is not particularly limited. As an obstacle which may form a specific object to be monitored, for example, a fallen rock, a landslide, an object which intrudes into a railroad crossing and the like are named. These obstacles differ in frequency of becoming an obstacle depending on environmental characteristics at a point (zone X1) which is a monitoring object. Accordingly, it is preferable that each of the respective sensors of the vehicle control system 1 has a detection logic suitable for detecting the presence or the non-presence of an obstacle considered most likely to occur corresponding to an environmental characteristic of a point (zone X1) which is a monitoring object.

Further, in the vehicle control system 1, by allowing the respective sensors to have different detection logics or detection mechanisms, kinds of obstacles which form main objects to be detected may be dispersed. For example, with the use of an optical sensor having a wide viewing angle, not only the zone X1 but also other points become objects to be monitored. Further, unlike the ground sensor 30 fixed to a ground, in the case of the vehicle mounted sensor 102 mounted on the vehicle 10, it is requested that when the vehicle mounted sensor 102 detects the presence of an obstacle in the zone X1, a sufficient distance can be ensured between the vehicle 10 and the obstacle, and the vehicle 10 can be sufficiently decelerated in front of the obstacle using such a distance. Accordingly, it is preferable that a performance of a detection range (detection distance) which the vehicle mounted sensor 102 has be set such that the detection range is long enough to ensure the abovementioned "sufficient distance". By dispersing objects to be mainly detected depending on the sensors, it is possible to expect the detection of various dangerous situations in the point (zone X1) which is a monitoring object. Such variations are also applicable to other embodiments described later in the same manner.

### (1-2) Functional constitution

Next, the functional constitution of a main part of the vehicle control system 1 is described with reference to Fig. 2. Fig. 2 is a block diagram showing a main functional constitutional example of the vehicle control system shown in Fig. 1. In Fig. 2, information inputted in and outputted from the vehicle control system 1 shown in Fig. 1 is described and, particularly, the detail of the speed determination part 103 is additionally described.

As shown in Fig. 2, the speed determination part 103 includes: a position detection part 105 which acquires position information of the vehicle 10; a monitoring information request part 106 which requests the monitoring information server 20 to offer monitoring information; a risk evaluation part 107 which determines a risk rate of the vehicle 10 relating to the predetermined point (zone X1, for example); and a speed command arithmetic operation part 108 which determines a target speed (speed command value) of the vehicle 10 based on the risk rate. Technical features of the respective parts are described hereinafter.

The position detection part 105 has a function of detecting a position of the vehicle 10, and outputs position information obtained by the detection to the monitoring information request part 106. To be more specific, the position detection part 105, in the same manner as a position detection part which a railroad vehicle includes in general, may detect (calculate) a relative position of the vehicle 10 by calculating a relative position from a reference position (a position of a beacon installed in a station or on a track between stations) by counting a rotational speed of a wheel. Alternatively, the position detection part 105 may detect (calculate) an absolute position of the vehicle 10 by using a satellite positioning system such as a global positioning system (GPS).

The monitoring information request part 106 receives position information of the vehicle 10 from the position detection part 105, and for example, when the vehicle 10 approaches a position away from the zone X1 by a predetermined distance or the like, outputs an command such that a monitoring information request is notified to the monitoring information server 20 via the communication part 101. When the monitoring information server 20 receives a monitoring information request, the monitoring information control part 202 transmits monitoring information stored in the monitoring information memory part 203 to the vehicle 10, and the transmitted monitoring information is inputted to the risk evaluation part 107 via the communication part 101.

The risk evaluation part 107 receives monitoring information from the monitoring information server 20 and a monitoring result from the vehicle mounted sensor 102 as an input, and determines a risk rate of the vehicle 10 relating to the predetermined position (zone X1) which is a monitoring object. In such an operation, "a risk rate of the vehicle 10 relating to the zone X1" indicates a degree of danger that traveling of the vehicle 10 is obstructed by the presence of an obstacle in the zone X1. The higher the risk rate in the zone X1, the higher a possibility that an obstacle exists in the zone X1 so that traveling of the vehicle 10 is obstructed. The detail of the determination of the risk rate is described later in (3). The risk rate determined by the risk evaluation part 107 is outputted to the speed command arithmetic operation part 108.

The speed command arithmetic operation part 108 determines, based on the risk rate determined by the risk evaluation part 107, a target speed corresponding to the risk rate. In this case, "target speed" means an upper limit target of an allowable traveling speed of the vehicle 10. To be more specific, for example, "target speed" corresponds to a speed command value indicated in the speed command arithmetic operation part 108 in Fig. 3 described later. The speed command arithmetic operation part 108 outputs a speed command to the vehicle controller 104 such that a traveling speed of the vehicle 10 does not exceed a target speed.

In this manner, in the vehicle control system 1, the speed determination part 103 determines a danger that an obstacle exists at the predetermined point which is a monitoring object as a risk rate based on a result of a monitoring operation (monitoring result, monitoring information) of the respective sensors (ground sensor 30, vehicle mounted sensor 102) performed at the predetermined point (zone X1) which is a monitoring object. Then, the vehicle control system 1 determines a target speed corresponding to the risk rate, and outputs a speed command. Accordingly, the vehicle control system 1 can control a traveling speed of the vehicle 10 in view of a degree of danger that traveling of the vehicle is obstructed due to the existence of an obstacle in the zone X1.

### (1-3) Risk rate and target speed

Fig. 3 is a view for describing a processing example relating to the determination of a risk rate. As described previously, in this embodiment, "risk rate" means a degree of danger that an obstacle exists in the zone X1 so that traveling of the vehicle 10 is obstructed. Hereinafter, one example of processing for determining a risk rate and the determination of a target speed and the like performed thereafter is described with reference to Fig. 3.

First, as shown in Fig. 3, the risk evaluation part 107 receives monitoring information and a monitoring result from the monitoring information server 20 and the vehicle mounted sensor 102 respectively, and performs monitoring information arithmetic operation processing 111 for generating obstacle detection information and lapsed time information based on the received monitoring information and monitoring result.

In the monitoring information arithmetic operation processing 111, by referencing data on the presence or the non-presence of an obstacle contained in monitoring information and data on the presence or the non-presence of an obstacle contained in the monitoring result, when it is indicated that an obstacle exists in either one of the monitoring information or the monitoring result, obstacle detection information that an obstacle is "present" is obtained, and when it is indicated that an obstacle exists in neither the monitoring information nor the monitoring result, obstacle detection information that an obstacle is "not present" is obtained. First risk rate calculating processing 112 is performed using this obstacle detection information.

Further, in the monitoring information arithmetic operation processing 111, by referencing data on monitoring time contained in monitoring information and data on monitoring time contained in a monitoring result, a differential between a new time out of both monitoring times and a present time (that is, "lapsed time" from a point of time that the sensors (ground sensor 30, vehicle mounted sensor 102) in the vehicle control system 1 perform a monitoring operation last) is calculated thus obtaining lapsed time information. Second risk rate calculating processing 113 is performed using this lapsed time information.

A monitoring result from the vehicle mounted sensor 102 is determined when a monitoring operation is performed with respect to the zone X1 as described previously. Accordingly, for example, until the zone X1 falls within a monitoring range of the vehicle mounted sensor 102, the monitoring result is rendered "undetermined". Such a monitoring result "undetermined" does not contribute to a processing result obtained by the risk evaluation part 107. That is, when the monitoring result from the vehicle mounted sensor 102 is "undetermined", obstacle detection information and lapsed time information are determined based on only monitoring information from the monitoring information server 20.

In the first risk rate calculating processing 112, a first risk rate is calculated based on the presence or the non-presence of an obstacle. To be more specific, for example, in the case where obstacle detection information obtained via monitoring information arithmetic operation processing 111 is that an obstacle is "present", a relatively high risk rate "S" is calculated as the first risk rate. In the case where obstacle detection information obtained via the monitoring information arithmetic operation processing 111 is that an obstacle is "not-present", a risk rate "L" which is a risk rate lower than the risk rate "S" is calculated as the first risk rate.

On the other hand, in the second risk rate calculating processing 113, a second risk rate is calculated based on a lapsed time. In the second risk rate calculating processing 113, the longer a lapsed time indicated by lapsed time information obtained by the monitoring information arithmetic operation processing 111, the higher risk rate is calculated as the second risk rate. To be more specific, for example, in the case where a lapsed time in lapsed time information is 1 minute or less, a risk rate "L" is set as the second risk rate. In the case where a lapsed time in lapsed time information is longer than 1 minute and 2 minutes or less, a risk rate "M" is set as the second risk rate. In the case where a lapsed time in lapsed time information is longer than 2 minutes and 3 minutes or less, a risk rate "H" is set as the second risk rate. In the case where a lapsed time in lapsed time information is longer than 3 minutes, a risk rate "S" is set as the second risk rate.

Then, a final risk rate is determined by performing risk rate determination processing 114 based on the first risk rate calculated by the first risk rate calculating processing 112 and the second risk rate calculated by the second risk rate calculating processing 113. To be more specific, out of the first risk rate (S or L in the case shown in Fig. 3) and the second risk rate (any one of S, H, M, L in the case shown in Fig. 3), the higher risk rate is selected by performing an "OR" logical calculation thus adopting (determining) the risk rate having a higher degree of danger out of the inputted risk rates as a final risk rate. For example, in the case where one risk rate is "L" and the other risk rate is "M", the risk rate "M" having a higher degree of danger is adopted.

In this manner, in the risk rate determining processing 114, by calculating the risk rates (first and second risk rates) having the respective degree of danger with respect to the presence or the non-presence of an obstacle and by selecting the risk rate having the higher degree of danger out of the first and second risk rates by an OR logical calculation, a risk rate which emphasizes safety can be determined.

Next, the risk rate obtained by the risk rate determining processing 114 is outputted to the speed command arithmetic operation part 108 as the risk rate determined by the risk evaluation part 107, and the speed command arithmetic operation part 108 determines a target speed (speed command value) corresponding to the inputted risk rate.

In Fig. 3, a specific example of target speeds (speed command values) corresponding to the risk rates is indicated in the speed command arithmetic operation part 108 in the form of a table. According to this table, in the case where risk rate determining processing 114 is performed, when the risk rate is "L", "traveling allowed (maximum speed: 40 km)" is determined as a speed command value (target speed). When the risk rate is "M", "strong brake stoppable speed (maximum speed: 30 km)" is determined as the speed command value (target speed) . When the risk rate is "H", "weak brake stoppable speed (maximum speed: 20km) " is determined as the speed command value (target speed) . When the risk rate is "S", "traveling stopped (speed per hour: 0 km)" is determined as the speed command value (target speed). The speed command value "traveling stopped" means that the vehicle 10 is stopped in front of a predetermined point (zone X1) which is an object. Further, the speed values of the specific target speeds which are associated with the respective risk rates indicate merely one example, and it is desirable that proper speed values are determined corresponding to maximum traveling speed or the like which is allowable based on a brake performance of the vehicle 10 and a route along which the track 100 is installed.

Then, by outputting a target speed determined by the risk rate determining processing 114 to the vehicle controller 104 as a speed command (see Fig. 2), the vehicle controller 104 controls a traveling speed of the vehicle 10 such that the traveling speed does not exceed the target speed.

The determination of risk rate and a target speed has been described in detail heretofore. In the abovementioned description, the description has been made with respect to the case where the risk rate are set sequentially at four stages at maximum consisting of stages L, H, M, and S in order from the lower risk rate. However, setting of the risk rates in the vehicle control system 1 according to this embedment is not limited to such setting.

For example, the risk rates may be set at two stages, that is, whether an obstacle is "present" or "not present" at a predetermined point (for example, zone X1) which is a monitoring object, for example. In this case, it is possible to acquire an advantageous effect where a processing load is reduced compared to the case where the risk rates are set at three stages or more.

Further, for example, when the risk rates are set at three stages or more, the larger the number of stages to be set, the more the processing becomes relatively complicated. However, for example, it is possible to incorporate probability of obstruction by an obstacle or degrees of damages when traveling of the vehicle 10 is obstructed into danger that the obstacle obstructs traveling of the vehicle 10 and hence, it is possible to acquire an advantageous effect that the determination of a risk rate (risk rating) can be performed finely by taking into account these detailed degrees of damage. Although processing for controlling a traveling speed of the vehicle 10 corresponding to a risk rate is described later with reference to Fig. 3, the finer the risk rate is classified, the more the traveling speed of the vehicle 10 can be controlled in detail. Accordingly, it is expected that both safety of transportation and speedy transportation can be acquired simultaneously.

In a specific example of a target speed (speed command value) shown in Fig. 3, the reasons a plurality of stoppable speeds in plural stages such as "strong brake stoppable speed" of the risk rate "M" and "weak brake stoppable speed" of the risk rate "H" are provided for taking into account comfortable feeling and safety of occupants in the vehicle 10. To describe in more detail, a possibility that an obstacle is found when the vehicle 10 almost reaches a predetermined point (zone X1) which is a monitoring object in a state where the risk rate "H" is determined is higher than the possibility in a state where the risk rate "M" is determined. When an obstacle is actually detected (for example, the obstacle "present" is actually found by the vehicle mounted sensor 102), the risk rate is raised to "S" so that a speed command value with respect to the vehicle 10 becomes "traveling stopped (speed per hour: 0 km)". In such a case, it is necessary to decelerate a traveling speed of the vehicle 10 to a speed of 0 km per hour during a period before the vehicle 10 travels between the detection distances of the vehicle mounted sensor 102 (that is, it is necessary to apply braking such that a braking distance becomes shorter than a detection distance) . Accordingly, the higher a speed command value before the risk rate is raised, the more sudden braking becomes necessary thus giving rise to lowering of comfortable riding feeling of occupants or lowering of safety such as falling over of the vehicle 10. In view of the above, to prepare for such a phenomenon (stoppage of the vehicle in future), when a possibility that a speed command for stopping the vehicle is outputted is relatively high, a control is performed so as to slightly lower a traveling speed of the vehicle 10 (that is, a week brake stoppable speed) in advance.

### (1-4) Operational example of vehicle control system 1

The configuration and the characterizing processing or the like of the vehicle control system 1 according to this embodiment has been described heretofore. Hereinafter, an operational example by such a vehicle control system 1 is described, and advantageous effects acquired by the vehicle control system 1 are described.

### (1-4-1) Operational example (part 1)

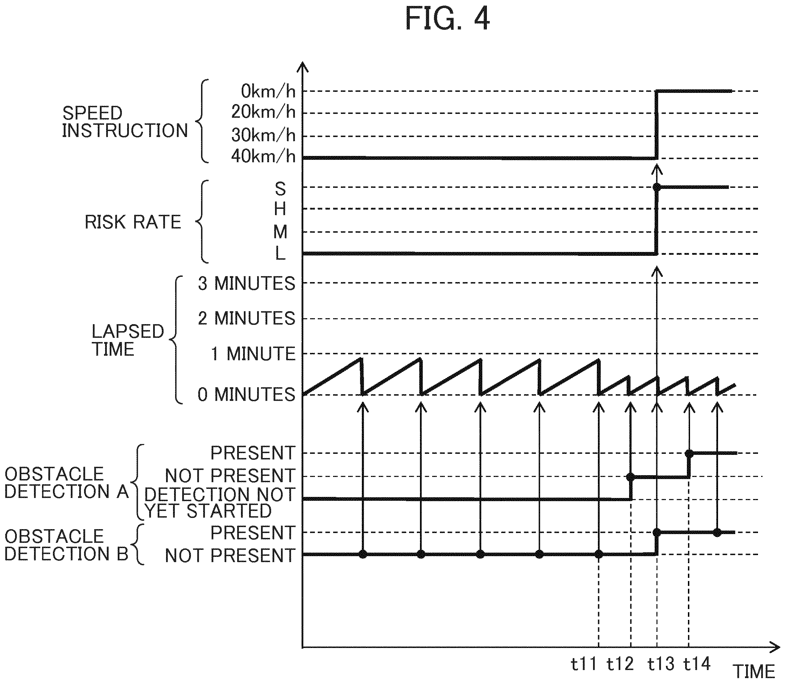

Fig. 4 is a view (part 1) for describing an operational example of the vehicle control system according to the first embodiment. Fig. 4 shows how various speed commands, risk rates, a lapsed time and detection results appear in the vehicle control system 1 along with a lapse of time in a state where a monitoring operation of the ground sensor 30 and the vehicle mounted sensor 102 normally function and the vehicle 10 travels on the track 100 in a zone X1 direction.

In Fig. 4, speed commands (Okm/h, 20km/h, 30km/h, 40km/h) indicate speed commands which are inputted from the speed command arithmetic operation part 108 to the vehicle controller 104. The specific values of the speed commands correspond to speed command values exemplified in Fig. 3. The risk rates (S, H, M, L) shown in Fig. 4 indicate the risk rates inputted to the speed command arithmetic operation part 108 from the risk evaluation part 107. The specific values of the risk rates (S, H, M, L) correspond to values of the risk rates exemplified in Fig. 3. The lapsed times (3 minutes, 2 minutes, 1 minute, 0 minutes) shown in Fig. 4 indicate lapsed times from a point of time that a monitoring operation is applied to the zone X1 last time. The specific values of the lapsed times correspond to lapsed times which become the reference with respect to the second risk rate exemplified in Fig. 3. An obstacle detection A and an obstacle detection B shown in Fig. 4 respectively indicate monitoring results of the presence or the non-presence of an obstacle with respect to the zone X1 by the vehicle mounted sensor 102 and the ground sensor 30. To be more specific, "present" means that an obstacle is detected, "not-present" means that an obstacle is not detected, and "detection not yet started" means that the detection of an obstacle is not yet performed. In Fig. 4, arrow marks drawn from points on the obstacle detections A, B with respect to a lapsed time indicate that a monitoring operation for detecting the presence or the non-presence of an obstacle is performed at such "points", and the lapsed time is reset to "0 minutes" as the monitoring operation is performed.

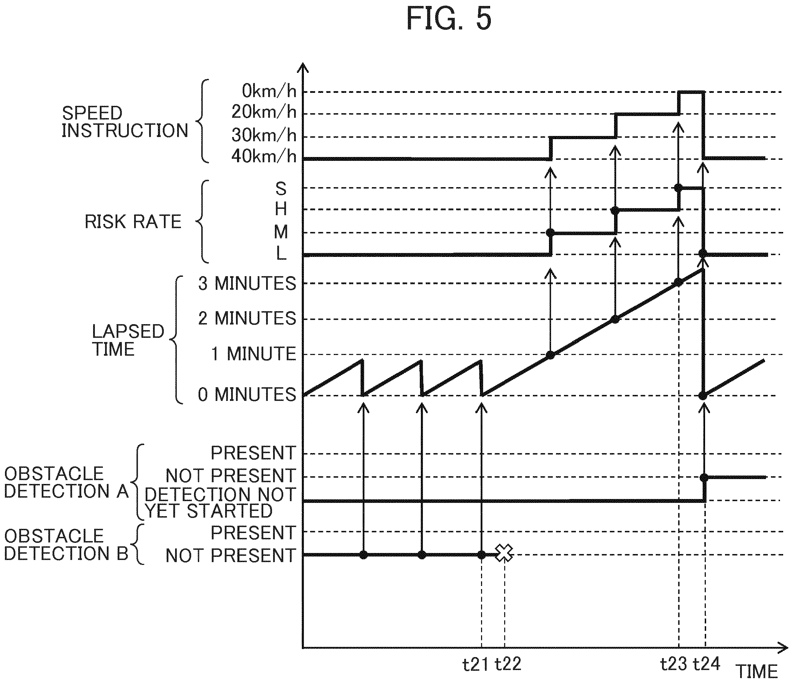

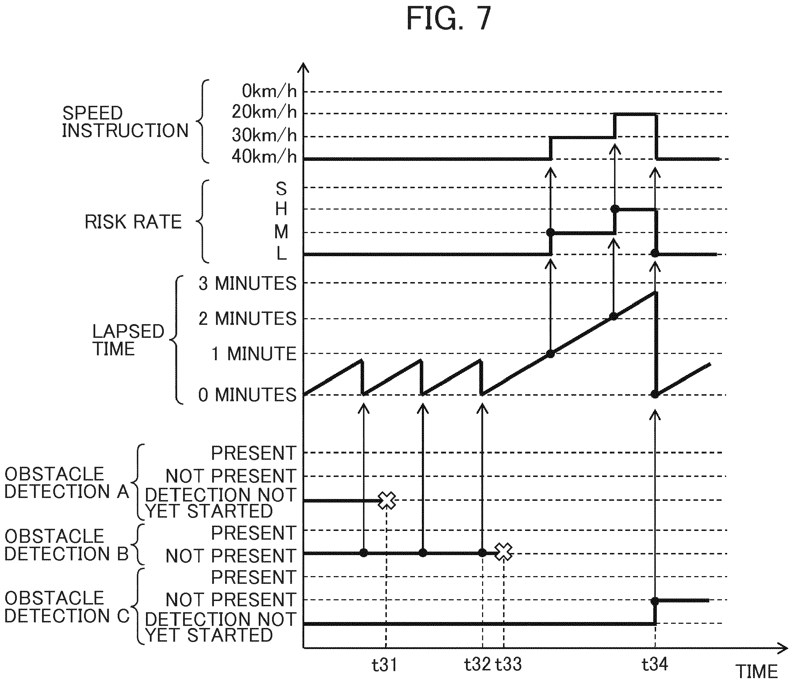

In this manner, Fig. 4 shows a mode where the respective information amounts (obstacle detection, lapsed time, risk rate and speed command) change in an interlocking manner with each other. The arrows are used for indicating an interlocking relationship. In an actual operation, a processing time, a transfer time and the like are necessary and hence, these changes in information amount brought about by such interlocking operations are not generated at the same time. However, for the sake of convenience of the description, the interlocking changes are indicated at the same point of time. Further, the abovementioned display method shown in Fig. 4 is substantially equal to display methods shown in Fig. 5 and Fig. 7 so that the duplicate description is omitted hereinafter.

In Fig. 4, the obstacle detection B by the ground sensor 30 periodically confirms the presence or the non-presence of an obstacle in the zone X1 at an interval of 1 minute. Then, all of monitoring results in the obstacle detection B become "not present" when confirmed at a point of time t11 and become "present" when confirmed at a point of time t13.

On the other hand, the confirmation of the presence or the non-presence of an obstacle in the obstacle detection A by the vehicle mounted sensor 102 is performed at a point of time t12 firstly, and the zone X1 does not fall within a monitoring range of the vehicle mounted sensor 102 during a period until the point of time t12. Accordingly, such a period is regarded as "detection not yet started" (undetermined) . Then, although a monitoring result in the obstacle detection A is "not present" at the point of time t12, the monitoring result is "present" at a point of time t14 which is next confirmation timing.

An operation of the vehicle control system 1 when such a monitoring result in obstacle detection is obtained is described in a chronological order. Firstly, until a point of time t11 arrives, a situation that a lapsed time is reset to 0 when the lapsed time exceeds 1 minute is repeated based on a monitoring result "non-presence" in obstacle detection B. At this stage of operation, a risk rate is determined to be "L" which is the lowest degree of danger. Accordingly, a target speed set by a speed command becomes 40km/h (traveling allowed), and the risk rate is not raised due to a reason that a lapsed time is increased. Then, although a monitoring result in obstacle detection A is obtained at the point of time t12, the monitoring result at this point of time is also "not present" and hence, neither the risk rate nor a target speed is changed.

Then, at a point of time t13, the ground sensor 30 detects that an obstacle is present in the zone X1, and a monitoring result "presence" is obtained in the obstacle detection B. At this stage of operation, with the acquisition of the monitoring result, a lapsed time is reset to 0 minutes, while based on the monitoring result that the obstacle is "present", the risk rate is determined to be "S" which is the highest degree of danger, and a target speed set by a speed command becomes 0km/h (travelling stopped).

In the case shown in Fig. 4, soon after the point of time t13 at which the monitoring result in the obstacle detection B is obtained, at a timing of a point of time t14, a monitoring result that an obstacle is "present" is obtained in the obstacle detection A by the vehicle mounted sensor 102. However, at the point of time t13, only the monitoring result in the obstacle detection B by the ground sensor 30 becomes "present". In this manner, even in the case where the monitoring results in the obstacle detections differ from each other, the vehicle control system 1 determines the risk rate having the higher degree of danger based on the abovementioned OR logical calculation. Accordingly, the vehicle control system 1 readily outputs a speed command for stopping the vehicle 10 based on a monitoring result by the ground sensor 30 thus securing safety.

### (1-4-2) Operational example (part 2)

Fig. 5 is a view (part 2) for describing an operational example of the vehicle control system according to the first embodiment. Fig. 5 shows speed commands, a risk rate, a lapsed time and a detection result taken in the vehicle control system 1 along with a lapse of time when the vehicle 10 travels on the track 100 in the direction toward the zone X1 in the case where a monitoring operation of the ground sensor 30 does not function normally due to a failure or the like in the midst of the monitoring operation so that only the monitoring operation of the vehicle mounted sensor 102 can be obtained.

As shown in Fig. 5, until a point of time t21 arrives, in the same manner as the point of time t11 shown in Fig. 4, only the monitoring result "non-presence" in the obstacle detection B is obtained at an interval of 1 minute, and the monitoring result in the obstacle detection A is held at "detection not yet started" (undetermined) . The vehicle mounted sensor 102 can confirm the presence or the non-presence of an obstacle in the zone X1 firstly at a timing of a point of time t24 which arrives later, and can obtain the monitoring result in the obstacle detection A firstly at the point of time t24.

Assuming that a failure occurs in the ground sensor 30 at a point of time t22 in such a situation, the monitoring result in the obstacle detection B cannot be obtained thereafter. At this stage of operation, as described previously, also the monitoring result in the obstacle detection A cannot be obtained until the point of time t23. Accordingly, a lapsed time is increased in a state where the monitoring result is not obtained at all during a period from the point of time t21 to the point of time t24. As shown in Fig. 5, with the increase of the lapsed time, the risk rate is raised in the direction toward the risk rate indicating higher degree of danger from "L" to "M", "H", "S". Along with the rise of the risk rate, a lower target speed is instructed by a speed command. When the risk rate "S" indicating the highest degree of danger is determined finally at the point of time t23, a speed command instructs 0km/h (traveling stopped) as a target speed.

That is, at the point of time t23 shown in Fig. 5, even when the presence of an obstacle is not actually detected in the zone X1 by the ground sensor 30 or the vehicle mounted sensor 102, a control is performed so as to stop the vehicle 10 based on the increase of a lapsed time after the presence or the non-presence of an obstacle is finally confirmed. Such a vehicle control is performed for precautionarily decelerating or stopping the vehicle 10 from a viewpoint that a danger (risk) that an obstacle may be present in the zone X1 is increased when a time (lapsed time) during which the presence or the non-presence of an obstacle in the zone X1 is not confirmed is increased. By performing such a vehicle control, it is possible to secure safety of the vehicle 10 before the vehicle 10 actually enters the zone X1.

Then, in the case shown in Fig. 5, a target speed is set to 0km/h (traveling stopped) by a speed command at the point of time t23 and hence, the vehicle 10 is stopped before the vehicle 10 reaches the zone X1. Thereafter, at the point of time t24, a monitoring result that an obstacle is "not present" is obtained in the obstacle detection A by the vehicle mounted sensor 102 and hence, the lapsed time is reset to 0 minutes and, at the same time, the risk rate "L" indicating the lowest degree of danger is determined. Then, due to the determination of the risk rate "L", it is determined that a dangerous situation that an obstacle may be present in the zone X1 is avoided and hence, a target speed instructed by a speed command is returned to 40km/h (traveling allowed) whereby the vehicle 10 can pass the zone X1.

By performing the vehicle control at the point of time t24 in this manner, even when the vehicle control system 1 performs a control of temporarily stopping the vehicle 10 based on the increase of a danger in the zone X1, with the confirmation made thereafter by the sensor that an obstacle is not present in the zone X1, an on-site confirmation of the zone X1 by an operator or the like becomes unnecessary. Accordingly, by releasing such a control applied to the vehicle 10, a usual traveling control can be restored. The realization of such a vehicle control from stoppage of the vehicle 10 to restoring of the vehicle 10 which does not always require the confirmation by an operator or the like exhibits high utility particularly in the case where the vehicle 10 is an unmanned operation vehicle.

In the case where a target speed instructed by a speed command is set to 0km/h (traveling stopped) at the point of time t23 and, thereafter, a monitoring result that an obstacle is "present" is obtained in the obstacle detection A at the point of time t24 in Fig. 5, a speed command instructing stoppage of the vehicle 10 is not released so that the vehicle 10 is stopped. Then, traveling of the vehicle 10 is restarted again after the obstacle is removed by an operator, a driver or the like.

In the operational examples shown in Fig. 4 and Fig. 5, a timing at which the monitoring operation in the obstacle detection A by the vehicle mounted sensor 102 and a timing at which the monitoring operation in the obstacle detection B by the ground sensor 30 differ from each other. In the vehicle control system 1, for example, assuming that it is preliminarily set in advance that the monitoring operation by the ground sensor 30 is performed at an interval of 1 minutes for "00 seconds" in each minute, by setting the monitoring operation by the vehicle mounted sensor 102 such that the monitoring operation is performed for every "30 seconds", it is possible to realize displacement between execution timings of the monitoring operations. By displacing the execution timings of the monitoring operation in the obstacle detections by a plurality of sensors in this manner, when the plurality of sensors are normally operated, the monitoring operation is frequently performed. Accordingly, when an obstacle is present in the zone X1, the obstacle can be found at an early stage. Further, by displacing the execution timings of the monitoring operations, intervals when the monitoring operations are performed can be shortened and hence, the number of opportunities that a lapsed time is reset is increased. Accordingly, it is also possible to expect an advantageous effect that a risk rate is not unnecessarily raised when an obstacle is not detected in the zone X1 (that is, unnecessary speed limitation due to deceleration of a target speed caused by rising of a risk rate is not performed). Such displacement of timings of the monitoring operations can be also adopted by a second embodiment and a third embodiment described later.

### (1-5) Advantageous effects

As has been described above, according to the vehicle control system 1 of this embodiment, although safe traveling of the vehicle 10 traveling on the track 100 is obstructed by an obstacle which invades in the predetermined point (zone X1) on the track, by determining a degree of danger (risk rate) brought about by the presence of the obstacle in the zone X1 based on information obtained by monitoring the presence or the non-presence of the obstacle in the zone X1 by the vehicle mounted sensor 102 mounted on the vehicle 10 and the ground sensor 30 which can constantly monitor the zone X1 and by controlling a traveling speed of the vehicle 10 by setting a target speed instructed by a speed command based on the determined risk rate, it is possible to suppress or prevent an obstacle which intrudes in the zone X1 from obstructing safe traveling of the vehicle 10.

In the vehicle control system 1 according to this embodiment, with respect to how a traveling speed of the vehicle 10 should be controlled to a target speed to enable the vehicle 10 to pass the zone X1 safely (or to stop before the vehicle 10 arrives at the zone X1), it is possible to determine the target speed based on a lapsed time from a point of time that the presence or the non-presence of an obstacle in the zone X1 is monitored last time. To be more specific, from a viewpoint that the longer the lapsed time, the higher a risk that traveling of the vehicle 10 is obstructed by a newly invading obstacle, when an obstacle is present in the zone X1, an acceleration and deceleration of the vehicle 10 can be controlled by setting a target speed to a lower speed such that a driver sufficiently decreases a speed of the vehicle in front of an obstacle in the case of a manned operation (an automatic vehicle control system sufficiently decreases a speed of the vehicle in front of an obstacle in the case of an unmanned vehicle) while taking into account safety of passengers.

In the vehicle control system 1 according to this embodiment, in the case where a control of simply stopping the vehicle 10 is only performed when the abovementioned risk rate is high, when an obstacle is not present at a predetermined point (zone X1), traveling operation efficiency of the vehicle 10 is lowered. In view of the above, the risk rates in plural stages are prepared corresponding to target speeds in plural stages. By determining one risk rate among the plurality of risk rates, the higher the risk rate, the lower the target speed is set, while when the risk rate is relatively low, a degree of deceleration of the target speed can be weakened. As a result, according to the vehicle control system 1 of this embodiment, in a situation where traveling of the vehicle 10 is obstructed due to the presence of an obstacle at a predetermined point, it is possible to realize a precautionary vehicle control by acquiring both safety of the vehicle 10 and a sufficient travel service operation ratio.

### (2) Second embodiment

### (2-1) Configuration of vehicle control system 2

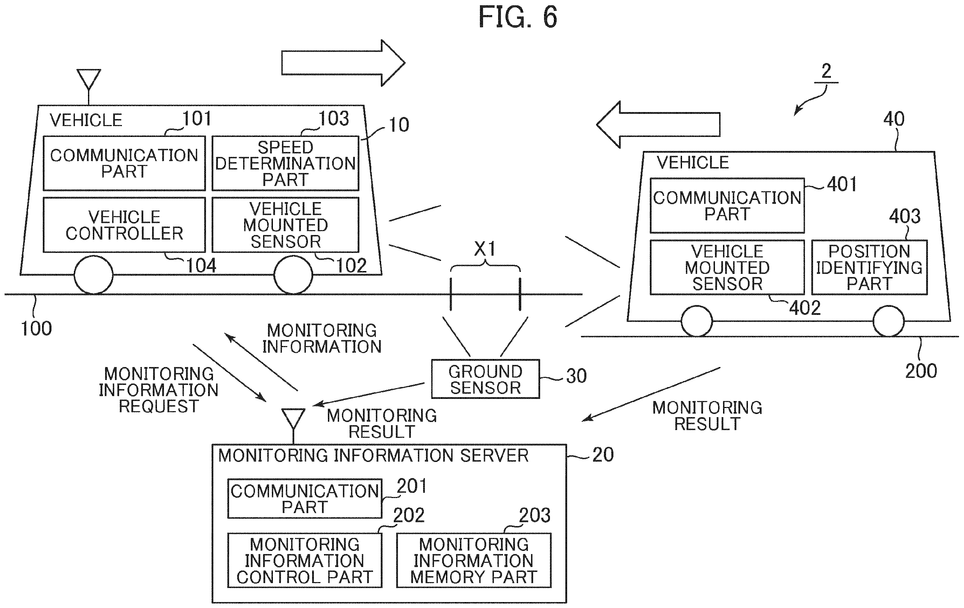

Fig. 6 is a view for describing a constitutional example of a vehicle control system according to a second embodiment. To compare the vehicle control system 2 according to the second embodiment 2 with the vehicle control system 1 according to the first embodiment, the second embodiment is characterized in that, the presence or the non-presence of an obstacle at a predetermined point (zone X1) is monitored not only by a ground sensor 30 and a vehicle mounted sensor 102 of a vehicle 10 but also a vehicle mounted sensor 402 provided to a vehicle 40 which travels on a track 200 different from a track 100 of a vehicle 100. As also shown in Fig. 6, the configuration of the vehicle control system 2 is substantially equal to the configuration of the vehicle control system 1 according to the first embodiment except for the configuration relevant to the vehicle 40. Accordingly, the description of this configuration is omitted.

As shown in Fig. 6, the vehicle 40 is a vehicle which travels on the track 200 in a direction opposite to a direction that the vehicle 10 travels, and approaches toward a zone X1 in the direction opposite to the direction that the vehicle 10 travels. The relationship between the track 200 and the track 100 can be grasped as setting of a plurality of lines practically used in general in a railway transport.

The vehicle 40 includes: a communication part 401 which performs communication with the outside; a vehicle mounted sensor 402 which can detect the presence or the non-presence of an obstacle within a predetermined range; and a position identifying part 403 which can grasp a position of the vehicle 40. In this embodiment, the zone X1 is one example of "predetermined point (predetermined range)" which becomes an object for detecting the presence or the non-presence of an obstacle, and may be considered equal to the zone X1 in the first embodiment.

The communication part 401 can communicate with the outside of the vehicle 40 (a communication part 201 of a monitoring information server 20 in the case shown in Fig. 6) by radio communication using data and signals, and the communication part 401 can be realized by a communication interface of a general-use radio communication.

The vehicle mounted sensor 402 is, in the same manner as the vehicle mounted sensor 102 of the vehicle 10, a sensor capable of detecting (or monitoring) the presence or the non-presence of an obstacle in a predetermined monitoring range, and a general-use obstacle sensor can be used as the vehicle mounted sensor 402. To be more specific, when the vehicle 40 which travels on the track 200 captures the zone X1 on the track 100 within a monitoring range, the vehicle mounted sensor 402 shown in Fig. 6 detects the presence or the non-presence of an obstacle in the zone X1.

A result of detection by the vehicle mounted sensor 402 is transmitted to a monitoring information server 20 as a monitoring result. This monitoring result contains a detection result indicating the presence or the non-presence of an obstacle and a monitoring time at which the detection is performed. It is sufficient that a timing at which the monitoring result is transmitted from the vehicle mounted sensor 402 to the monitoring information server 20 be a timing that the monitoring result of the zone X1 can be surely transmitted to the monitoring information server 20. To be more specific, for example, the monitoring result may be transmitted periodically at a cycle shorter than a time which is necessary for the vehicle 40 to pass the zone X1. Alternatively, the monitoring result may be transmitted in conformity with timing that the vehicle 40 passes the zone X1. By transmitting the monitoring result at such a timing, the monitoring result with respect to the zone X1 by the vehicle mounted sensor 402 is supplied to the monitoring information server 20 with certainty.

A detection logic and a detection mechanism of the vehicle mounted sensor 402 are not limited to specific types. As described previously with respect to the respective sensors of the vehicle control system 1 in the first embodiment, it is sufficient that the detection logic and the detection mechanism are suitable for detecting the presence or the non-presence of an obstacle in the zone X1 when the vehicle 40 approaches the zone X1 while taking into account an environmental characteristic of the zone X1. Particularly, in the case of the vehicle mounted sensor 402, the zone X1 which is a monitoring object is disposed on the track 100 different from the track 200 on which the vehicle mounted sensor 402 per se travels and hence, it is preferable that the vehicle mounted sensor 402 have a long detection distance and a wide detection angle as monitoring functions. Accordingly, to be more specific, the use of an optical sensor having a wide viewing angle is considered, for example.

The position identifying part 403 can be realized in the form of a device, to be more specific, for example, as a railway carriage provides in general, which has a function of detecting the position of the vehicle 40 and detects the relative position of the vehicle 40 by calculating the relative position from reference position (the position of a station, the position of a beacon installed on the track between stations or the like) by counting a rotational speed of a wheel. The position identifying part 403 can be also realized in the form of a device which detects the absolute position of the vehicle 40 using a satellite measurement system such as a GPS. Since the position identifying part 403 grasps the position of the vehicle 40 and hence, the vehicle mounted sensor 402 of the vehicle 40 can determine whether or not the zone X1 falls within a monitoring range of the vehicle mounted sensor 402, and when the zone X1 falls within the monitoring range, the presence or the non-presence of an obstacle in the zone X1 can be confirmed.

Then, the monitoring information server 20 which receives a monitoring result from the vehicle mounted sensor 402 of the vehicle 40 stores and accumulates the monitoring result from the vehicle mounted sensor 402 as the monitoring information in the same manner as processing applied to the monitoring result from the ground sensor 30. To be more specific, the monitoring information control part 202 makes the monitoring information memory part 203 store and accumulate the monitoring result as the monitoring information and, at the same time, when the monitoring information control part 202 receives a monitoring information request from the vehicle 10 via the communication part 201, the monitoring information memory part 203 transmits the monitoring information stored in the monitoring information memory part 203 to the vehicle 10 via the communication part 201.

The processing in the vehicle 10 is substantially equal to the processing in the vehicle control system 1 of the first embodiment and hence, the detailed description of the processing is omitted. The difference between the first embodiment and the second embodiment lies in that the monitoring information which is received from the monitoring information server 20 contains the monitoring result from the vehicle mounted sensor 402 and hence, determination processing of a risk rate and determination processing of a target speed are performed based on the monitoring results from three sensors (vehicle mounted sensor 102, ground sensor 30, vehicle mounted sensor 402).

In this manner, according to the vehicle control system 2 according to the second embodiment 2, the monitoring results can be obtained from the larger number of sensors than the first embodiment, and a traveling control of the vehicle 10 can be performed based on these monitoring results and hence, the vehicle control system 2 of the second embodiment can expect an advantageous effect of securing higher safety and a higher travel service operation ratio of the vehicle 10 in addition to the advantageous effects obtained by the vehicle control system 1 of the first embodiment.

### (2-2) Operational example of vehicle control system 2

The operational example of the vehicle control system 2 according to this embodiment is described, and advantageous effects obtained by the vehicle control system 2 are also described.

Fig. 7 is a view for describing an operational example of the vehicle control system according to the second embodiment. Obstacle detection A and obstacle detection B shown in Fig. 7 are equal to the obstacle detection A and the obstacle detection B shown in Fig. 4 and Fig. 5, and are a monitoring result from a vehicle mounted sensor 102 and a monitoring result from a ground sensor 30. Obstacle detection C newly shown in Fig. 7 is the monitoring result obtained from the vehicle mounted sensor 402.

In Fig. 7, the obstacle detection B by the ground sensor 30 periodically outputs the monitoring result that an obstacle is "not present" in the zone X1 at an interval of 1 minute until a point of time t32. However, a failure occurs in the ground sensor 30 at a timing of a point of time t33 and, thereafter, the monitoring result is not outputted. Further, the obstacle detection A by the vehicle mounted sensor 102 does not perform the monitoring operation with respect to the zone X1 (monitoring result being held at "detection not yet started" (undetermined)), and a failure occurs in the vehicle mounted sensor 102 at a point of time t31 and, thereafter, the monitoring result is not outputted. On the other hand, at the point of time t33 at which neither the monitoring result in the obstacle detection A nor the monitoring result in the obstacle detection B is outputted, the obstacle detection C by the vehicle mounted sensor 402 is in a "detection not yet started" (undetermined) state because the zone X1 does not fall within a monitoring range of the vehicle mounted sensor 402. However, thereafter, at timing of a point of time t34, a monitoring operation is performed with respect to the zone X1 which falls within the monitoring range of the vehicle mounted sensor 402 so that the monitoring result that an obstacle is "not present" is outputted.

How speed commands, risk rates, lapsed times and detection results appear in the vehicle control system 2 when the obstacle detection by the respective sensors is performed as described above is described along with a lapse of time.

First, as described previously, a failure occurs in the vehicle mounted sensor 102 at the point of time t31. However, even before the point of time t31, the monitoring result in the obstacle detection A is "detection not yet started" and hence, in the case shown in Fig. 7, there is no possibility that the monitoring result in the obstacle detection A influences the lapsed time and, the risk rates and the like.

Then, until a point of time t32, a lapsed time is reset to 0 minutes for every 1 minute based on the monitoring result in the obstacle detection B by the ground sensor 30 and hence, the risk rate is maintained at the lowest "L" so that a target speed instructed by a speed command is also maintained at 40km/h (traveling allowed). This situation is substantially equal to the situation from starting to the point of time t11 shown in Fig. 4 and the situation from starting to the point of time t21 shown in Fig. 5. The monitoring result is not outputted from the obstacle detection C and hence, the monitoring result becomes "detection not yet started" and does not influence the risk rates and the like.

Next, when a failure occurs in the ground sensor 30 at a point of time t33, thereafter, a period during which a monitoring result relating to the presence or the non-presence of an obstacle is outputted from neither one of the obstacle detections continues until a point of time t34 and hence, a lapsed time is gradually increased. Then, when the lapsed time exceeds 1 minute, a risk rate is raised to "M" so that a target speed instructed by a speed command is decelerated to 30km/h (strong brake stoppable speed) . When the lapsed time further passes 1 minute and exceeds 2 minutes, the risk rate is raised to "H" so that the target speed instructed by the speed command is decelerated to 20km/h (weak brake stoppable speed).

As described above, during a period from the point of time t32 to the point of time t33, a failure occurs in both two sensors (vehicle mounted sensor 102, ground sensor 30) capable of outputting monitoring results and hence, the monitoring result of obstacle detection is not obtained so that the lapsed time is steadily increased. However, during this period, even when the presence or the non-presence of an obstacle in the zone X1 is not confirmed actually, based on the determination that a danger that an obstacle is present is increased along with the increase of the lapsed time, it is possible to decelerate a target speed instructed by a speed command by raising a risk rate. The vehicle control system 2 enables such deceleration of a target speed. Accordingly, assuming the case where the presence of an obstacle in the zone X1 is visually recognized, by performing only weak brake braking, it is possible to stop the vehicle 10 in front of the zone X1 while securing safety such that passengers do not fall down.

However, when such a situation where a monitoring result of obstacle detection is not obtained continues, finally, in the same manner as described with respect to the point of time t23 in Fig. 5, the risk rate "S" having the highest degree of danger is determined so that a target speed instructed by a speed command is set to 0km/h (traveling stopped) whereby the vehicle 10 is stopped. Then, in a state where the monitoring result of the obstacle detection is not obtained, there is no option but traveling and transportation by the vehicle 10 are continued based on the determination made by a driver or the like. Further, assuming that the vehicle 10 is an unmanned operation vehicle, an operation becomes necessary where an operator goes to the zone X1 which is an object point, confirms safety, and thereafter, a travel service operation is restarted through predetermined safety procedures. Accordingly, restarting of the travel service operation requires a considerable time thus giving rise to a concern that a travel service operation ratio of the vehicle 10 is largely lowered.

In view of such circumstances, according to the vehicle control system 2, as an obstacle detection which can overcome such a situation, the obstacle detection C by the vehicle mounted sensor 402 is provided. That is, even when a failure occurs in both the vehicle mounted sensor 102 and the ground sensor 30, the vehicle 40 traveling from the direction opposite to the traveling direction of the vehicle 10 approaches the zone X1, and the presence or the non-presence of an obstacle in the zone X1 is confirmed by the vehicle mounted sensor 402. Accordingly, the increase of the lapsed time can be reset, and a risk rate relating to the presence or the non-presence of an obstacle in the zone X1 can be recalculated.

To be more specific, at a timing of time t34 shown in Fig. 7, a monitoring result that an obstacle is "not present" is obtained by the obstacle detection C and hence, the lapsed time is reset to 0 minutes . Further, it is also confirmed that the obstacle is "not present" and hence, the risk rate is lowered to "L" which has the lowest degree of danger. As a result, a target speed instructed by a speed command is also returned to 40km/h (traveling allowed). Accordingly, even when the abovementioned safety procedures are not taken by a driver or an operator, it is possible to allow the vehicle 10 to restore a traveling speed and to pass the zone X1 safely.

As has been described above, by performing the operation control shown in Fig. 7, in the vehicle control system 2, in the case where a period during which a monitoring result of the presence or the non-presence of an obstacle at an object point (zone X1) is not obtained is continued due to a failure or the like in a plurality of sensors (vehicle mounted sensor 102, ground sensor 30), along with the increase of a lapsed time, a risk rate is raised so as to decelerate a target speed instructed by a speed command. Accordingly, a traveling speed of the vehicle 10 can be controlled corresponding to a degree of danger before the vehicle 10 enters the zone X1 and hence, it is possible to cope with an obstacle while ensuring safety of passengers.

Further, in the vehicle control system 2, even when a failure occurs in the plurality of sensors as described above, a monitoring result of the presence or the non-presence of an obstacle at an object point is obtained also by the sensor (vehicle mounted sensor 402) mounted on another vehicle 40. Accordingly, even in the case where a target speed of the vehicle 10 is decelerated along with the increase of a lapsed time, when the non-presence of an obstacle is confirmed by a newly obtained monitoring result, it is possible to return the vehicle 10 to usual travelling without requiring the confirmation on site by a driver or an operator and hence, while performing a traveling control which takes into account safety of the vehicle 10, it is also possible to ensure a travel service operation ratio of the vehicle 10.

Such a vehicle control system 2 exhibits the abovementioned advantageous effect more effectively when the vehicle 10 is an unmanned operation vehicle. In a conventional vehicle control system, in the case of an unmanned operation vehicle, the confirmation of safety relies on only sensors or the like. Accordingly, for example, in the case where a failure occurs in a sensor in the midst between stations so that the presence or the non-presence of an obstacle in the zone X1 cannot be confirmed, there is no option but sending an operator to a site and performing restoring procedures on the site. In this case, there arise drawbacks including a drawback that it takes time for an operator to reach the site and a drawback that there is a risk of the occurrence of a secondary disaster due to an operation on a track. However, in the vehicle control system 2, it is possible to confirm the presence or the non-presence of an obstacle in the zone X1 by a vehicle which travels on a neighboring track (the vehicle 40 which travels on the track 200 in this embodiment, for example) . Accordingly, it is possible to make the vehicle 10 travel by itself and reach the next station in an unmanned state after confirming safety. That is, it is possible to reduce or avoid the consumption of time and the occurrence of a secondary disaster due to the execution of restoring steps by an operator, and it is also possible to ensure both safety of the vehicle 10 and a travel service operation ratio even when the vehicle 10 is an unmanned operation vehicle.

In the abovementioned description, the vehicle 40 travels in the direction opposite to the traveling direction of the vehicle 10. However, in the vehicle control system 2 according to this embodiment, the traveling direction of the vehicle 40 is not limited to such a traveling direction. For example, as can be observed in general on a quadruple track, the vehicle control system 2 according to this embodiment is also applicable to the case where the vehicle 40 travels on the track 200 disposed adjacently to the track 100 for the vehicle 10 in the same direction as the vehicle 10 in parallel.

Further, in the abovementioned description, the vehicle on which the vehicle mounted sensor is mounted is only the vehicle 40 except for the vehicle 10. However, in the vehicle control system 2 according to this embodiment, a sensor substantially equal to the vehicle mounted sensor 402 may be mounted on a further number of vehicles respectively. To be more specific, for example, in the case where two tracks are installed on both sides of the track 100, by mounting the abovementioned vehicle mounted sensor on the vehicles traveling on the tracks and by making these vehicle mounted sensors confirm the presence or the non-presence of an obstacle in the zone X, the further number of monitoring results are collected to the monitoring information server 20 thus realizing a highly reliable traveling control of the vehicle 10.

### (3) Third embodiment

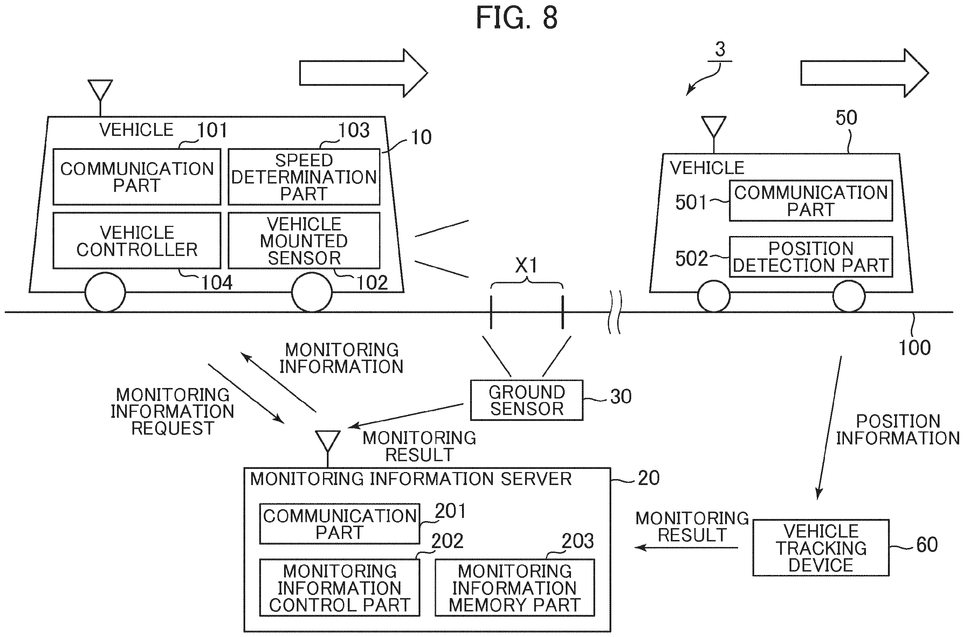

Fig. 8 is a view for describing a constitutional example of a vehicle control system according to a third embodiment. The vehicle control system 3 according to the third embodiment differs from the vehicle control system 1 according to the first embodiment with respect to a point that the vehicle control system 3 further includes: a vehicle 50 which travels prior to a vehicle 10 which travels on the same track 100; and a vehicle tracking device 60 which is capable of tracking the position of the vehicle 50. As shown in Fig. 8, the configuration of the vehicle control system 3 is substantially similar to the configuration of the vehicle control system 1 according to the first embodiment except for the vehicle 50 and the vehicle tracking device 60 and hence, the description of the configuration of other parts of the vehicle control system 3 are omitted for the sake of brevity. The vehicle control system 3 according to the third embodiment is characterized in that it is regarded that an operation of monitoring the presence or the non-presence of an obstacle at a predetermined point (zone X1) is performed based on a traveling result of the vehicle 50 at the predetermined point.

As shown in Fig. 8, the vehicle 50 is a vehicle which travels on the same track 100 on which the vehicle 10 travels and passes the zone X1 prior to the vehicle 10. The vehicle 50 includes a communication part 501 which performs communication with the outside and a position detection part 502 which acquires position information of the vehicle 50.

The communication part 501 is capable of communicating with the outside of the vehicle 50 (vehicle tracking device 60 in the case shown in Fig. 8) by radio communication using data or signals and can be realized by a communication interface of a general-use radio communication.

The position detection part 502 has a function of detecting the position of the vehicle 50 and periodically transmits position information obtained by the detection to the vehicle tracking device 60 by way of the communication part 501. Although the detailed description is omitted, the position detection part 502 can be realized by a configuration similar to the position detection part 105 which is previously described in the first embodiment.

The vehicle tracking device 60 is a device which is capable of tracking the position of the vehicle 50 using position information transmitted from the vehicle 50. A function of tracking the position of the vehicle 50 which the vehicle tracking device 60 has is a function used in general for the purpose of a traveling control or the like in a railway transport system, and the position can be grasped based on the position information which is periodically transmitted from the position detection part 502 of the vehicle 50. A place where the vehicle tracking device 60 is installed is not particularly limited and, for example, the vehicle tracking device 60 may be installed in a vehicle control room or in the inside of a monitoring information server 20.

The vehicle tracking device 60 grasps a point of time when the vehicle 50 passes the zone X1 by tracking the position of the vehicle 50, and regards that an operation of monitoring the presence or the non-presence of an obstacle in the zone X1 is performed based on a traveling result of the vehicle 50 in the zone X1, and transmits a monitoring result obtained by the monitoring operation (monitoring result of the zone X1 obtained by the vehicle 50) to the monitoring information server 20. To be more specific, when the vehicle 50 safely passes the zone X1, it means that no obstacle is present in the zone X1 at the point of time when the vehicle 50 passes (monitoring time) the zone X1 and hence, a monitoring result that an obstacle is "not present" at the monitoring time is transmitted. On the other hand, when the vehicle 50 cannot safely pass the zone X1, assuming a point of time when the vehicle 50 reaches the zone X1 as a monitoring time, a monitoring result that an obstacle is "present" at the monitoring time is transmitted.

Then, in the monitoring information server 20, in the same manner as the processing for a monitoring result of the zone X1 obtained by a ground sensor 30 which is transmitted from the ground sensor 30, a monitoring information control part 202 stores and cumulates the monitoring result of the zone X1 obtained by the vehicle 50 which is transmitted from the vehicle tracking device 60 in a monitoring information memory part 203 as monitoring information.

The monitoring information server 20 stores and cumulates the monitoring result of the zone X1 obtained by the ground sensor 30 and the monitoring result of the zone X1 obtained by the vehicle 50 as monitoring information, and when the monitoring information server 20 receives a monitoring information request from the vehicle 10, the monitoring information server 20 transmits these monitoring information pieces to the vehicle 10. In the vehicle 10, processing similar to the processing described in the first embodiment is performed using these monitoring information pieces and a monitoring result obtained by the vehicle mounted sensor 102. As a result, a speed determination part 103 can determine a target speed instructed by a speed command based on the monitoring results of the zone X1 obtained by the vehicle mounted sensor 102, the ground sensor 30 and the vehicle 50, and the vehicle controller 104 controls a traveling speed of the vehicle 10 at the determined target speed.

As has been described heretofore, in the vehicle control system 3 according to this embodiment, based on the concept that when the vehicle 50 which travels prior to the vehicle 10 on the same track 100 can safely passes a predetermined point (zone X1), the actual passing of the vehicle 50 means that an obstacle is not present in the zone X1, the monitoring result obtained by the vehicle 50 is treated substantially in the same manner as the confirmation of an obstacle in the zone X1 by the sensor. Accordingly, the vehicle control system 3 collects the larger number of monitoring results than the vehicle control system 1 according to the first embodiment by an amount corresponding to such a monitoring result (monitoring result obtained by the vehicle 50) and hence, in addition to the advantageous effect obtained by the vehicle control system 1 according to the first embodiment, it is expected that the vehicle control system 3 is can control traveling of the vehicle 10 while ensuring more safety.

To describe the third embodiment from another point of view, it may be considered that the vehicle control system 3 according to this embodiment is configured to obtain the monitoring result of the zone X1 based on a result of passing of the vehicle 50 which travels prior to the vehicle 10 in place of obtaining the monitoring result of the zone X1 by the vehicle 40 which travels on a different track 200 in the vehicle control system 2 according to the second embodiment. Accordingly, the vehicle control system 3 according to this embodiment can obtain advantageous effects substantially equal to the advantageous effects obtained by the vehicle control system 2 according to the second embodiment.

To be more specific, for example, as has been exemplified by Fig. 7 in the second embodiment, even in the case where a failure occurs in both the vehicle mounted sensor 102 mounted on the vehicle 10 and the ground sensor 30a so that a monitoring result of obstacle detection cannot be obtained, in the vehicle control system 3, when a monitoring result of the zone X1 is obtained based on the result of passing from the vehicle 50 traveling prior to the vehicle 10, a lapsed time, a risk rate, and a target speed instructed by a speed command can be determined based on the monitoring result. Accordingly, a traveling control of the vehicle 10 can be performed considering a danger that an obstacle is present in the zone X1.

Further, as a unique advantageous effect according to the vehicle control system 3 of this embodiment, the vehicle tracking device 60 and the position detection part 502 having functions used in general for the purpose of a traveling control or the like in a railway transportation system can be used. Accordingly, the vehicle control system 3 can obtain a monitoring result relating to the presence or the non-presence of an obstacle at a predetermined point without mounting an additional sensor on a vehicle other than the vehicle 10 which is an object of the vehicle control unlike the vehicle mounted sensor 402 in the second embodiment.

The vehicle control system 3 according to this embodiment can use a record of safe passing of the vehicle 50 traveling prior to the vehicle 10 as a monitoring result of the zone X1. However, to estimate an actual railway transport, a distance is required to some extent as a traveling service interval between the prior vehicle 50 and the succeeding vehicle 10. Accordingly, when a target speed of the vehicle 10 is determined based on only a monitoring result obtained by the vehicle 50, there is a possibility that a lapsed time is exceedingly increased. When the lapsed time is excessively increased, a large rise of a risk rate is not avoidable. As a result, there is a high possibility that a traveling speed (target speed) of the vehicle 10 is largely suppressed.

To be more specific, with respect to the increase of a lapsed time, generally in the railway transport, from a viewpoint of security, between the vehicle 10 and the vehicle 50 traveling on the same track 100, it is necessary to maintain a distance between the vehicles which is equal to or longer than a predetermined distance and hence, at least a traveling service interval corresponding to the distance between the vehicles becomes necessary. In this case, it is estimated that a lapsed time is increased depending on a traveling service interval. Further, in general, a traveling service interval between the prior vehicle 50 and the succeeding vehicle 10 is set to several minutes to several tens of minutes by a transportation plan and hence, it is estimated that a lapsed time becomes a long time of several minutes to several tens of minutes.

Accordingly, in the vehicle control system 3, as an expanded embodiment for coping with such an anticipated drawback, in place of the vehicle 50, it may be possible to use a movable body such as a small-sized and light-weighted model vehicle (for example, a vehicle corresponding to a vehicle referred to as "outrider train" in the field of railway transportation) which does not obstruct traveling of the vehicle 10 even when the model vehicle is brought into contact with the vehicle 10 or a small-sized unmanned reconnaissance drone (for example, drone) which flies along the track 100.

When the abovementioned movable body is used in place of the vehicle 50, the movable body includes parts corresponding to the communication part 501 and the position detection part 502. Further, in the case where a sensor which can confirm the surrounding state more clearly is mounted on the abovementioned movable body and a confirmation result of the sensor is transmitted to the vehicle tracking device 60 or the monitoring information server 20, it is possible to detect an obstacle on the track 100 including the zone X1 without overlooking the obstacle. Accordingly, it is possible to enhance reliability of the monitoring operation of the presence or the non-presence of an obstacle, and this contributes to a safe traveling control of the vehicle 10.

In this manner, also in the vehicle control system 3 according to the expanded third embodiment, since the movable body which substitutes the vehicle 50 passes the zone X1 or passes over the zone X1, it is possible to confirm the presence or the non-presence of an obstacle such as a landslide or a vehicle left on a railroad crossing. Accordingly, a monitoring result of the zone X1 can be obtained. To be more specific, for example, when a model vehicle or a small-sized unmanned reconnaissance drone fails to pass the zone X1, the vehicle tracking device 60 recognizes that the position of the movable body does not move around the zone X1. In such a case, the vehicle tracking device 60 transmits a result that an obstacle is present in the zone X1 and a monitoring time to the monitoring information server 20. Accordingly, the monitoring result of the zone X1 obtained by the movable body can be outputted.

In this manner, the vehicle control system 3 can achieve a function similar to the function obtained by the vehicle 50 by substituting the vehicle 50 with the abovementioned movable body. In addition, without worrying about a vehicle interval necessary for security, the movable body can travel prior to the vehicle 10 close to the vehicle 10 and hence, it can solve a drawback that a lapsed time is increased as described above when actual railway transportation is estimated.

### (4) Other embodiments

According to the vehicle control system 1 of the first embodiment to the vehicle control system 3 of the third embodiment described above, the description has been made by limiting a point which forms a monitoring object for confirming the presence or the non-presence of an obstacle to one zone X1. However, the present invention is not limited to such a configuration and, for example, a plurality of monitoring object zones may be set. In such a case, a monitoring information server 20 stores and cumulates a result of confirmation of the presence or the non-presence of an obstacle for each monitoring object zone and a monitoring time as monitoring information. In the case where the monitoring information request part 106 of the speed determination part 103 requests the monitoring information server 20 to transmit the monitoring information of the zone which the vehicle 10 is almost reaching by a monitoring information request, an operation similar to the operation applied to the zone X1 in the abovementioned respective embodiments is applicable to each of the plurality of zones and hence, a speed control of the vehicle 10 can be realized based on a degree of danger of the presence or the non-presence of an obstacle in the plurality of zones.

In such a case where the plurality of zones are set as monitoring objects, when a dedicated ground sensor 30 is mounted in each plural zones, the plurality of ground sensors 30 are mounted along the track 100. In this case, along with the increase of the number of the ground sensors 30, the possibility of the occurrence of a failure in some ground sensors 30 is increased. However, as has been described in the first to third embodiments according to the present invention, even when a situation occurs where some of the monitoring results of the monitoring object zones cannot be obtained due to the occurrence of failure in the sensors or the like, the determination of the degree of danger (risk rate) can be assisted by other obtained monitoring results and hence, a speed control which sufficiently takes safety of the vehicle 10 into consideration can be realized. Accordingly, in a state where a failure may occur in some of the plurality of ground sensors 30 as described above, it is expected that the number of scenes where the advantageous effects according to the present invention can be acquired is increased.

Further, in the abovementioned vehicle control system 1 of the first embodiment to the vehicle control system 3 of the third embodiment, it has been described that the speed determination part 103 is mounted on the vehicle 10 (see Fig. 1, Fig. 6 and Fig. 8) . However, the present invention is not limited to such a configuration and, for example, the speed determination part 103 may be disposed on a specific facility on a ground in the same manner as the monitoring information server 20. Further, the description has been made with respect to the case where a monitoring result obtained by the vehicle mounted sensor 102 mounted on the vehicle 10 is directly inputted to the speed determination part 103 (see Fig. 2). However, the present invention is not limited to such configuration, and a monitoring result obtained by the vehicle mounted sensor 102 may be also transmitted to the monitoring information server 20 and may be stored and cumulated in the monitoring information memory part 203. In such a case, all monitoring results are collected in the monitoring information server 20 and hence, it is effective to configure the vehicle control system such that processing for determining a risk rate and processing for determining a target speed are performed in the monitoring information server 20.

Further, in the abovementioned first to third embodiments, the description has been made by applying the present invention to the railway transport system where the vehicle 10 travels on the track 100 in accordance with a predetermined traveling plan. However, an applicable range of the present invention is not limited to a railway transport system. In an environment where a vehicle travels on a predetermined path and traveling of the vehicle may be obstructed by a contact with an obstacle which enters the path, the present invention is also applicable to a transportation system which uses an automobile or a conveying device in a factory, for example.

The present invention is not limited to the abovementioned embodiments and includes various modifications. For example, the abovementioned embodiments have been described in detail for facilitating the understanding of the present invention, and are not always limited to the vehicle control system including all configurations which have been described. Further, some of the configurations of one embodiment can be exchanged with the configurations of another embodiment. Further, the configurations of another embodiment can be added to the configurations of one embodiment. Still further, the configurations of another embodiment can be added to, be eliminated from or be exchanged with some of the configurations of respective embodiments.

Further, some or all of the abovementioned respective configurations, functions, processing parts, processing means and the like may be realized by hardware by designing the vehicle control system using an integrated circuit or the like. Further, the abovementioned respective configurations, functions or the like may be realized by software by a processor interpreting and executing a program which realizes respective functions. Information such as programs, tables, and files for realizing respective functions may be stored in a storage device such as a memory, a hard disc, or an SSD (Solid State Drive) or a recording medium such as an IC card, an SD card or a DVD.

Further, in the drawings, control lines and information lines supposed which are considered necessary for the description of the vehicle control system are shown and, the drawings do not describe the case where all control lines and information lines used in a product are shown. It may be considered that almost all constitutional elements are interconnected with each other.

### List of Reference Signs

- 1, 2, 3:: vehicle control system
- 10, 40, 50:: vehicle
- 60:: vehicle tracking device
- 20:: monitoring information server
- 30:: ground sensor
- 100, 200:: track
- 101, 401, 501:: communication part
- 102, 402:: vehicle mounted sensor
- 103:: speed determination part
- 104:: vehicle controller
- 105:: position detection part
- 106:: monitoring information request part
- 107:: risk evaluation part
- 108:: speed command arithmetic operation part
- 111:: monitoring information arithmetic operation processing
- 112:: first risk rate calculating processing
- 113:: second risk rate calculating processing
- 114:: risk rate determining processing
- 201:: communication part
- 202:: monitoring information control part
- 203:: monitoring information memory part
- 403:: position identifying part
- 502:: position detection part

## Claims

1. A vehicle control system (1, 2, 3) for controlling a travel service of a first vehicle (10) which travels on a first track (100), the vehicle control system comprising:
a first sensor (102) mounted on the first vehicle (10), and capable of performing a monitoring operation for detecting presence or non-presence of an obstacle at a predetermined point (X1) of the first track (100) when the predetermined point falls within a detection range;
one or more second sensors (30, 402) mounted at a predetermined place other than the first vehicle (10), and capable of performing a monitoring operation for detecting presence or non-presence of an obstacle at the predetermined point (X1) at a predetermined timing;
a monitoring result collecting part (20) for collecting and storing a monitoring result of the monitoring operation by the second sensor;
a speed determination part (103) for determining a target speed of the first vehicle (10) based on the monitoring result stored in the monitoring result collecting part (20) or a monitoring result of the monitoring operation by the first sensor (102); and
a speed control part (104) for controlling a traveling speed of the first vehicle (10) based on a target speed determined by the speed determination part (103),
**characterized in that** the speed determination part (103) includes a risk evaluation part (107) for determining a final risk rate by:
calculating a first risk rate defined in plural degrees of danger based on a detection result of the presence or the non-presence of the obstacle at the predetermined point by the monitoring operations by the first (102) and the second (30, 402) sensors,
calculating a second risk rate defined in plural degrees of danger based on a lapsed time from a point of time that the most recent of the monitoring operations by the first (102) and the second (30, 402) sensors is performed, and
determining the risk rate showing a higher degree of danger out of the calculated first and second risk rates as the final risk rate; and
**in that** the speed determination part (103) further includes a speed command arithmetic operation part (108) for determining the target speed to be instructed to the speed control part (104) corresponding to the final risk rate determined by the risk evaluation part (107).

2. The vehicle control system (1, 2, 3) according to claim 1, wherein the speed determination part (103) is configured to perform determination of the final risk rate by the risk evaluation part (107) and the determination of the target speed by the speed command arithmetic operation part (108) based on a newly obtained monitoring result each time a monitoring result is newly obtained by the speed determination part whether from the monitoring result collecting part (20) or the first sensor (102).

3. The vehicle control system (1, 2, 3) according to claim 1, wherein when the presence of the obstacle is detected based on the detection result by the monitoring operations by the first (102) and the second (30, 402) sensors, the speed determination part (103) is configured to determine the target speed as "0".

4. The vehicle control system (1, 2, 3) according to claim 1, wherein for the second risk rate, the longer the lapsed time, the higher the degree of danger that is calculated by the risk evaluation part (107), and the lower the target speed determined by the speed command arithmetic operation part (108) when the final risk rate is the second risk rate.

5. The vehicle control system (1, 2, 3) according to claim 1, wherein at least one of the second sensors is a fixed sensor (30) installed at a place where presence or non-presence of the obstacle in the predetermined point (X1) is always detectable and is capable of repeatedly performing the monitoring operation at an arbitrary timing.

6. The vehicle control system (1, 2, 3) according to claim 1, wherein the monitoring operation at the predetermined point (X1) by either one of the first sensor (102) and the one or more second sensors (30, 402) is allowed to be performed at a timing interval different from that of the monitoring operation by other of the first sensor and the one or more second sensors.

7. The vehicle control system (2) according to claim 1,
wherein at least one of the second sensors (402) is installed on a second vehicle (40) which travels on a second track (200) different from the first track (100),
the second sensor (402) installed on the second vehicle (40) is capable of performing the monitoring operation which detects presence or non-presence of the obstacle at the predetermined point (X1) when the predetermined point of the first track (100) falls within a detection range, and
the monitoring result of the monitoring operation by the second sensor (402) installed on a second vehicle (40) is inputted to the monitoring result collecting part (20).

8. The vehicle control system (3) according to claim 1, further comprising:
a movable body (50) movable on the first track (100) in front of the first vehicle (10); and
a vehicle tracing part (60) for tracing a position of the movable body (50),
wherein the vehicle tracing part (60) is configured to monitor whether or not the movable body (50) safely passes the predetermined point (X1) by tracing the position of the movable body moving on the first track (100), to output a monitoring result that the obstacle does not exist at the predetermined point when the movable body safely passes the predetermined point to the monitoring result collecting part (20), and to output a monitoring result that the obstacle exists at the predetermined point when the movable body is not capable of safely passing the predetermined point to the monitoring result collecting part.

9. The vehicle control system (3) according to claim 8, wherein the movable body (50) is a model vehicle traveling on the first track (100) or an unmanned reconnaissance drone flying along the first track.

## Patentansprüche

1. Fahrzeugsteuersystem (1, 2, 3) zum Steuern eines Fahrtdienstes eines ersten Fahrzeugs (10), das sich auf einem ersten Gleis (100) fortbewegt, wobei das Fahrzeugsteuersystem Folgendes umfasst:
einen ersten Sensor (102), der auf dem ersten Fahrzeug (10) montiert und in der Lage ist, einen Überwachungsvorgang zum Detektieren der Gegenwart oder Nichtgegenwart eines Hindernisses an einem vorbestimmten Punkt (X1) des ersten Gleises (100) durchzuführen, wenn der vorbestimmte Punkt innerhalb eines Detektionsbereichs liegt;
einen oder mehrere Sensoren (30, 402), die an einer anderen vorbestimmten Stelle als dem ersten Fahrzeug (10) montiert und in der Lage ist/sind, zu einem vorbestimmten Zeitpunkt einen Überwachungsvorgang zum Detektieren der Gegenwart oder Nichtgegenwart eines Hindernisses an dem vorbestimmten Punkt (X1) durchzuführen;
einen Überwachungsergebniserhebungsteil (20) zum Erheben und Speichern eines Überwachungsergebnisses des Überwachungsvorgangs durch den zweiten Sensor;
einen Geschwindigkeitsbestimmungsteil (103) zum Bestimmen einer Sollgeschwindigkeit des ersten Fahrzeugs (10) basierend auf dem in dem Überwachungsergebniserhebungsteil (20) gespeicherten Überwachungsergebnis oder einem Überwachungsergebnis des Überwachungsvorgangs des ersten Sensors (102); und
einen Geschwindigkeitssteuerteil (104) zum Steuern einer Fahrtgeschwindigkeit des ersten Fahrzeugs (10) basierend auf einer vom Geschwindigkeitsbestimmungsteil (103) bestimmten Sollgeschwindigkeit;
**dadurch gekennzeichnet, dass** der Geschwindigkeitsbestimmungsteil (103) einen Risikobewertungsteil (107) zum Bestimmen einer Endrisikorate umfasst, das folgendermaßen erfolgt:
Berechnen einer ersten Risikorate, die in mehreren Gefahrengraden definiert ist, basierend auf einem Detektionsergebnis der Gegenwart oder Nichtgegenwart des Hindernisses am vorbestimmten Punkt durch die Überwachungsvorgänge des ersten (102) und des zweiten (30, 402) Sensors,
Berechnen einer zweiten Risikorate, die in mehreren Gefahrengraden definiert ist, basierend auf der ab einem Zeitpunkt, an dem der jüngste der Überwachungsvorgänge des ersten (102) und des zweiten (30, 402) Sensors durchgeführt wird, verstrichenen Zeit, und
Bestimmen der Risikorate, die einen höheren Gefahrengrad aufweist, aus der berechneten ersten und zweiten Risikorate als Endrisikorate; und
wobei der Geschwindigkeitsbestimmungsteil (103) ferner einen Geschwindigkeitsbefehlsrechenoperationsteil (108) zum Bestimmen der Sollgeschwindigkeit, die dem Geschwindigkeitssteuerteil (104) entsprechend der vom Risikobewertungsteil (107) bestimmten Endrisikorate zu befehlen ist.

2. Fahrzeugsteuersystem (1, 2, 3) nach Anspruch 1, wobei der Geschwindigkeitsbestimmungsteil (103) ausgelegt ist, um die Bestimmung der Endrisikorate durch den Risikobewertungsteil (107) und die Bestimmung der Sollgeschwindigkeit durch den Geschwindigkeitsbefehlsrechenoperationsteil (108) jedes Mal, wenn vom Geschwindigkeitsbestimmungsteil ein Überwachungsergebnis, von dem Überwachungsergebniserhebungsteil (20) oder dem ersten Sensor (102) neu erhalten wird, basierend auf dem neu erhaltenen Überwachungsergebnis durchzuführen.

3. Fahrzeugsteuersystem (1, 2, 3) nach Anspruch 1, wobei, wenn die Gegenwart des Hindernisses basierend auf dem Detektionsergebnis der Überwachungsvorgänge durch den ersten (102) und den zweiten Sensor (30, 402) detektiert wird, der Geschwindigkeitsbestimmungsteil (103) ausgelegt ist, um die Sollgeschwindigkeit als "0" zu bestimmen.

4. Fahrzeugsteuersystem (1, 2, 3) nach Anspruch 1, wobei für die zweite Risikorate, je länger die verstrichene Zeit ist, desto höher der vom Risikobewertungsteil (107) berechnete Gefahrengrad ist und desto niedriger die vom Geschwindigkeitsbefehlsrechenoperationsteil (108) bestimmte Zielgeschwindigkeit ist, wenn die Endrisikorate der zweiten Risikorate entspricht.

5. Fahrzeugsteuersystem (1, 2, 3) nach Anspruch 1, wobei zumindest einer der zweiten Sensoren ein fixer (30) Sensor ist, der an einer Stelle installiert ist, an der die Gegenwart oder Nichtgegenwart des Hindernisses an dem vorbestimmten Punkt (X1) jederzeit detektierbar ist, und in der Lage ist, den Überwachungsvorgang zu einem beliebigen Zeitpunkt wiederholt durchzuführen.

6. Fahrzeugsteuersystem (1, 2, 3) nach Anspruch 1, wobei der Überwachungsvorgang zu dem vorbestimmten Zeitpunkt (X1) durch einen des ersten Sensors (102) oder des einen oder der mehreren zweiten Sensoren (30, 402) in einem anderen Zeitintervall als der Überwachungsvorgang durch den anderen des ersten Sensors und des einen oder der mehreren zweiten Sensoren durchgeführt werden darf.

7. Fahrzeugsteuersystem (2) nach Anspruch 1, wobei zumindest einer der zweiten Sensoren (402) auf einem zweiten Fahrzeug (40) installiert ist, das sich auf einem zweiten Gleis (200), das ein anderes ist als das erste Gleis (100), fortbewegt,
wobei der auf dem zweiten Fahrzeug (40) installierte zweite Sensor (402) in der Lage ist, den Überwachungsvorgang, der die Gegenwart oder Nichtgegenwart des Hindernisses an dem vorbestimmten Punkt (X1) detektiert, durchzuführen, wenn der vorbestimmte Punkt des ersten Gleises (100) innerhalb eines Detektionsbereichs liegt, und
wobei das Überwachungsergebnis des Überwachungsvorgangs des auf dem zweiten Fahrzeug (40) installierten zweiten Sensor (402) in den Überwachungsergebniserhebungsteil (20) eingegeben wird.

8. Fahrzeugsteuersystem (3) nach Anspruch 1, ferner Folgendes umfassend:
einen bewegbaren Körper (50), der auf dem ersten Gleis (100) vor dem ersten Fahrzeug (10) bewegbar ist; und
einen Fahrzeugverfolgungsteil (60) zum Verfolgen einer Position des bewegbaren Körpers (50);
wobei der Fahrzeugverfolgungsteil (60) ausgelegt ist, um zu überwachen, ob der bewegbare Körper (50) sicher den vorbestimmten Punkt (X1) passiert, indem die Position des sich auf dem ersten Gleis (100) bewegenden bewegbaren Körpers verfolgt wird, um an den Überwachungsergebniserhebungsteil (20) ein Überwachungsergebnis auszugeben, dass das Hindernis an dem vorbestimmten Punkt nicht existiert, wenn der bewegbare Körper den vorbestimmten Punkt sicher passiert, und an den Überwachungsergebniserhebungsteil (20) ein Überwachungsergebnis auszugeben, dass das Hindernis an dem vorbestimmten Punkt existiert, wenn der bewegbare Körper nicht in der Lage ist, den vorbestimmten Punkt sicher zu passieren.

9. Fahrzeugsteuersystem (3) nach Anspruch 8, wobei der bewegbare Körper (50) ein Modellfahrzeug, das sich auf dem ersten Gleis (100) fortbewegt, oder eine unbemannte Aufklärungsdrohne, die das erste Gleis entlangfliegt, ist.

## Revendications

1. Système de commande de véhicule (1, 2, 3) pour commander un service de déplacement d'un premier véhicule (10) qui se déplace sur une première voie (100), le système de commande de véhicule comprenant :
un premier capteur (102) monté sur le premier véhicule (10), et capable d'effectuer une opération de surveillance pour détecter la présence ou la non-présence d'un obstacle au niveau d'un point prédéterminé (X1) de la première voie (100) lorsque le point prédéterminé se trouve dans une plage de détection ;
un ou plusieurs seconds capteurs (30, 402) montés à un endroit prédéterminé autre que le premier véhicule (10), et capables d'effectuer une opération de surveillance pour détecter la présence ou la non-présence d'un obstacle au niveau du point prédéterminé (X1) à un moment prédéterminé ;
une partie de collecte de résultat de surveillance (20) pour collecter et stocker un résultat de surveillance de l'opération de surveillance par le second capteur ;
une partie de détermination de vitesse (103) pour déterminer une vitesse cible du premier véhicule (10) sur la base du résultat de surveillance stocké dans la partie de collecte de résultat de surveillance (20) ou un résultat de surveillance de l'opération de surveillance par le premier capteur (102) ; et
une partie de commande de vitesse (104) pour commander une vitesse de déplacement du premier véhicule (10) sur la base d'une vitesse cible déterminée par la partie de détermination de vitesse (103),
**caractérisé en ce que** la partie de détermination de vitesse (103) comprend une partie d'évaluation de risque (107) pour déterminer un taux de risque final en :
calculant un premier taux de risque défini en plusieurs degrés de danger sur la base d'un résultat de détection de la présence ou de la non-présence de l'obstacle au point prédéterminé par les opérations de surveillance par les premier (102) et second (30, 402) capteurs,
calculant un second taux de risque défini en plusieurs degrés de danger sur la base d'un temps écoulé à partir d'un instant où la plus récente des opérations de surveillance par les premier (102) et second (30, 402) capteurs est effectuée, et
déterminant le taux de risque montrant un degré de danger plus élevé parmi les premier et second taux de risque calculés en tant que taux de risque final ; et
**en ce que** la partie de détermination de vitesse (103) comprend en outre une partie d'opération arithmétique d'instruction de vitesse (108) pour déterminer la vitesse cible à indiquer à la partie de commande de vitesse (104) correspondant au taux de risque final déterminé par la partie d'évaluation de risque (107).

2. Système de commande de véhicule (1, 2, 3) selon la revendication 1, dans lequel la partie de détermination de vitesse (103) est configurée pour effectuer une détermination du taux de risque final par la partie d'évaluation de risque (107) et la détermination de la vitesse cible par la partie d'opération arithmétique d'instruction de vitesse (108) sur la base d'un résultat de surveillance nouvellement obtenu à chaque fois qu'un résultat de surveillance est nouvellement obtenu par la partie de détermination de vitesse que ce soit depuis la partie de collecte de résultat de surveillance (20) ou le premier capteur (102).

3. Système de commande de véhicule (1, 2, 3) selon la revendication 1, dans lequel lorsque la présence de l'obstacle est détectée sur la base du résultat de détection par les opérations de surveillance par les premier (102) et second (30, 402) capteurs, la partie de détermination de vitesse (103) est configurée pour déterminer que la vitesse cible est égale à « 0 ».

4. Système de commande de véhicule (1, 2, 3) selon la revendication 1, dans lequel pour le second taux de risque, plus le temps écoulé est long, plus le degré de danger qui est calculé par la partie d'évaluation de risque (107) est élevé, et plus la vitesse cible déterminée par la partie d'opération arithmétique d'instruction de vitesse (108) est faible lorsque le taux de risque final est le second taux de risque.

5. Système de commande de véhicule (1, 2, 3) selon la revendication 1, dans lequel au moins l'un des seconds capteurs est un capteur fixe (30) installé à un endroit où la présence ou la non-présence de l'obstacle au point prédéterminé (X1) est toujours détectable et est capable d'effectuer de manière répétée l'opération de surveillance à un moment arbitraire.

6. Système de commande de véhicule (1, 2, 3) selon la revendication 1, dans lequel l'opération de surveillance au point prédéterminé (X1) par l'un du premier capteur (102) et des un ou plusieurs seconds capteurs (30, 402) est autorisé à être effectuée à un intervalle de temps différent de celui de l'opération de surveillance par l'autre du premier capteur et des un ou plusieurs seconds capteurs.

7. Système de commande de véhicule (2) selon la revendication 1,
dans lequel au moins un des seconds capteurs (402) est installé sur un second véhicule (40) qui se déplace sur une seconde voie (200) différente de la première voie (100),
le second capteur (402) installé sur le second véhicule (40) est capable d'effectuer l'opération de surveillance qui détecte la présence ou la non-présence de l'obstacle au point prédéterminé (X1) lorsque le point prédéterminé de la première voie (100) se trouve dans une plage de détection, et
le résultat de surveillance de l'opération de surveillance par le second capteur (402) installé sur un second véhicule (40) est entré dans la partie de collecte de résultat de surveillance (20).

8. Système de commande de véhicule (3) selon la revendication 1, comprenant en outre :
un corps mobile (50) mobile sur la première voie (100) devant le premier véhicule (10) ; et
une partie de repérage de véhicule (60) pour repérer une position du corps mobile (50),
dans lequel la partie de repérage de véhicule (60) est configurée pour surveiller si le corps mobile (50) passe en toute sécurité ou non par le point prédéterminé (X1) en repérant la position du corps mobile se déplaçant sur la première voie (100), pour délivrer en sortie un résultat de surveillance indiquant que l'obstacle n'existe pas au point prédéterminé lorsque le corps mobile passe en toute sécurité par le point prédéterminé vers la partie de collecte de résultat de surveillance (20), et pour délivrer en sortie un résultat de surveillance indiquant que l'obstacle existe au point prédéterminé lorsque le corps mobile n'est pas capable de passer en toute sécurité par le point prédéterminé vers la partie de collecte de résultat de surveillance.

9. Système de commande de véhicule (3) selon la revendication 8, dans lequel le corps mobile (50) est un véhicule modèle se déplaçant sur la première voie (100) ou un drone de reconnaissance sans pilote volant le long de la première voie.
